# EUROPEAN PATENT APPLICATION

(11) **EP 4 622 260 A1**
(43) Date of publication of application: **24.09.2025**
(21) Application number: 23893032.5
(22) Date of filing: 17.05.2023
(51) Int. Cl.: H04N 19/172

(54) **VIDEO ENCODING AND DECODING METHODS AND APPARATUS**

(30) Priority: 23.11.2022 CN 202211478458
(71) Applicant: Huawei Technologies Co., Ltd., Shenzhen, Guangdong 518129 (CN)
(72) Inventor: LIN, Zehui, Shenzhen, Guangdong 518129 (CN); CAI, Kangying, Shenzhen, Guangdong 518129 (CN); CAO, Xiaoran, Shenzhen, Guangdong 518129 (CN); XU, Yiqun, Shenzhen, Guangdong 518129 (CN)
(74) Representative: Eisenführ Speiser
(86) International application number: PCT/CN2023/094873
(87) International publication number: WO 2024/108931

(57) **Abstract**

A video encoding and decoding method and apparatus are disclosed, and relate to the computer field. An encoder side (a decoder side) selects a first type of filter from a plurality of specified types of filters based on a processing parameter indicated by rendering information, and obtains a virtual reference frame of to-be-processed data by using the first type of filter. A problem that compression performance is low because a reference frame is obtained by processing a reconstructed image by using a fixed filter is avoided at the encoder side. When the encoder side encodes the to-be-encoded image based on the virtual reference frame, a residual value corresponding to the image is reduced. This improves compression performance and video encoding efficiency. In addition, a problem that decoding efficiency is low because a reference frame is obtained by using a fixed filter to process a decoded image is avoided at the decoder side. A degree of matching between the virtual reference frame and a source image corresponding to a to-be-decoded image is improved. When the decoder side decodes a second image frame based on the virtual reference frame, an amount of processed data is reduced. This improves video decoding efficiency.

## Description

This application claims priority to Chinese Patent Application No. 202211478458.9, filed with the China National Intellectual Property Administration on November 23, 2022 and entitled "VIDEO ENCODING AND DECODING METHOD AND APPARATUS", which is incorporated herein by reference in its entirety.

### TECHNICAL FIELD

This application relates to the computer field, and in particular, to a video encoding and decoding method and apparatus.

### BACKGROUND

In a video encoding and decoding technology, a video compression technology is particularly important. In a video compression system, inherent redundant information in a video sequence may be reduced or removed by performing spatial (intra) prediction and/or temporal (inter) prediction. For a video encoding process of video compression, an encoder side randomly selects one or more reference frames from encoded frames of a video image, obtains a prediction block corresponding to a current image block from the reference frame, then calculates a residual value between the prediction block and the current image block, and perform quantization encoding on the residual value. However, the prediction block is selected by the encoder side from the reference frame based on motion compensation and motion estimation. Because the reference frame is an image obtained through processing by a loop filter, and the reference frame is an image corresponding to an adjacent frame of the current image block, a similarity between the reference frame and the current image block is low, and a difference between the prediction block and the current image block is large. As a result, the residual value between the prediction block and the current image block is large, an amount of data of a video bitstream obtained through encoding is large, performance of a video compression process is low, and video encoding efficiency is affected. Therefore, how to provide a more effective video encoding and decoding method becomes an urgent problem to be resolved currently.

### SUMMARY

This application provides a video encoding and decoding method and apparatus, to resolve a problem that an amount of data of a bitstream obtained by compressing a video is large and a video compression rate is low.

According to a first aspect, this application provides a video encoding method. The video encoding method may be applied to an encoding and decoding system or an encoder side that supports the encoding and decoding system in implementing the video encoding method. For example, the encoder side includes a video encoder. Herein, an example in which the encoder side performs the video encoding method provided in this embodiment is used for description. The video encoding method includes: The encoder side first obtains a source video and rendering information corresponding to the source video. Second, the encoder side determines a first type of filter from a plurality of specified types of filters based on the rendering information. Third, the encoder side performs interpolation on a first decoded image by using the first type of filter, to obtain a virtual reference frame of a second image. Fourth, the encoder side encodes the second image based on the virtual reference frame of the second image, to obtain a bitstream corresponding to the second image.

The source video includes a plurality of source images. The rendering information indicates a processing parameter used in a process of generating a bitstream by the encoder side based on the plurality of source images, and the processing parameter indicates that a first image and the second image in the plurality of source images have at least a partially overlapping area. The first decoded image is a reconstructed image obtained by encoding and then decoding the first image in the plurality of images.

In this embodiment, the encoder side determines the first type of filter from the plurality of specified types of filters, where the first type of filter matches a filter used in an image rendering process. This helps improve a similarity between the virtual reference frame determined by the encoder side by using the first type of filter and the second image by comparison with a problem that compression performance is low because a similarity between a reference frame and the second image is low when a fixed filter is used to process the reconstructed image to obtain the reference frame. Therefore, when the encoder side encodes the second image based on the virtual reference frame, a residual value corresponding to the second image is reduced, and an amount of data corresponding to the second image in the bitstream is reduced. This improves compression performance and video encoding efficiency.

In a possible implementation, the first type of filter determined by the encoder side based on the rendering information includes: The encoder side queries a specified mapping table based on the rendering information, to obtain a filter corresponding to each processing parameter in the rendering information. In addition, the encoder side determines the first type of filter from all filters corresponding to the rendering information.

The mapping table indicates at least one type of filter that is in the plurality of types of filters and that corresponds to each processing parameter.

The mapping table indicates a filter corresponding to each processing parameter in the rendering information, and a correspondence between the processing parameter and the filter is determined based on a filter used in each processing process of an image rendering engine. The encoder side queries the foregoing mapping table based on the obtained processing parameter, to determine the first type of filter. The first type of filter matches the filter used by the image rendering engine, so that a temporal-spatial correlation between the virtual reference frame obtained by the encoder side by using the first type of filter and the second image is improved, and the residual value that is of the second image and that is determined by the encoder side based on the virtual reference frame is reduced. This improves encoding effect.

In a possible implementation, the mapping table further indicates a priority of each type of filter in the plurality of types of filters. That the encoder side determines the first type of filter from filters corresponding to the rendering information includes: The encoder side obtains priorities of all the filters corresponding to the rendering information; and the encoder side uses a filter with a highest filter priority in all the filters as the first type of filter.

The encoder side selects, from the mapping table based on the processing parameter included in the rendering information, the filter that corresponds to a processing parameter and that has the highest priority as the first type of filter. A degree of matching between the filter with the highest priority and the filter used by the image rendering engine is also the highest. The encoder side performs interpolation on the reference frame by using the filter with the highest matching degree, to obtain the virtual reference frame. A temporal-spatial correlation between the virtual reference frame and the second image is improved, so that the residual value that corresponds to the second image and that is obtained by the encoder side based on the virtual reference frame is reduced. This improves encoding effect, reduces an amount of data obtained through encoding, and improves compression performance.

In a possible implementation, that the encoder side determines the first type of filter from all filters corresponding to the rendering information includes: The encoder side performs prediction on all the filters corresponding to the rendering information, to obtain at least one prediction result. In addition, the encoder side selects, from the at least one prediction result, a target prediction result in which encoding information meets a specified condition, and uses a filter corresponding to the target prediction result as the first type of filter.

One prediction result corresponds to one of all the filters, and the prediction result indicates encoding information obtained by precoding the second image by the encoder side by using the filter, and the encoding information includes at least one of a prediction bit rate and a distortion rate of the second image.

For example, the foregoing precoding is a process of performing inter prediction on the second image to obtain a prediction block of the second image, obtaining a residual value of a corresponding image block in the second image based on the prediction block, and then performing transform processing.

The encoder side performs precoding by using all the filters corresponding to the processing parameters in the rendering information. The encoder side filters, based on a specified condition, prediction results obtained through precoding, and uses a filter corresponding to a target prediction result that meets the specified condition as the first type of filter, so that a filter that actually meets the preset condition in all the filters is determined as the first type of filter, and a similarity between the virtual reference frame obtained by the encoder side through interpolation by using the first type of filter and the second image is the highest. In the process in which the encoder side encodes the second image, because the similarity between the virtual reference frame and the second image is the highest, the residual value that corresponds to the second image that is determined by the encoder side by encoding the second image based on the virtual reference frame is the smallest. This improves encoding compression effect.

In a possible example, the rendering information includes one or a combination of a depth map, an albedo map, and a post-processing parameter.

For the foregoing example in which the rendering information includes the processing parameters, this application provides the first type of filter corresponding to each processing parameter or a step of determining the first type of filter. If the rendering information includes the depth map, the first type of filter is determined based on a relationship between a pixel in the depth map and edge information of an object in the depth map. For example, the depth map may correspond to a Catmull-Rom filter or a bilinear filter.

Alternatively, if the rendering information includes the albedo map, the first type of filter is determined based on a relationship between a pixel in the albedo map and edge information of an object in the albedo map. For example, the albedo map may correspond to a Catmull-Rom filter or a B-spline filter.

Alternatively, if the post-processing parameter included in the rendering information includes an anti-aliasing parameter, the first type of filter is a filter indicated by the anti-aliasing parameter.

Alternatively, if the post-processing parameter included in the rendering information includes an instruction for execution of a motion blur module, the first type of filter is a bilinear filter.

Alternatively, the first type of filter is a Catmull-Rom filter.

For example, the edge information of the object in the depth map may be obtained in the following manner. For example, the encoder side performs sobel filtering on the depth map to obtain a filtering result. In addition, the encoder side performs an Otsu binarization on the filtering result, to obtain the edge information of the object in the depth map.

The encoder side determines, based on the correspondence between each processing parameter and the filter, the first type of filter corresponding to the rendering information, where the first type of filter has a specific matching degree with the filter used by the image rendering engine. The encoder side performs interpolation on the reference frame by using the first type of filter, to obtain the virtual reference frame. This improves a degree of matching between the virtual reference frame and the second image. When the encoder side encodes the second image based on the virtual reference frame, the obtained residual value corresponding to the second image is reduced. This improves encoding effect.

In a possible implementation, that the encoder side performs interpolation on a first decoded image by using the first type of filter determined based on the rendering information, to obtain a virtual reference frame of a second image includes: The encoder side first generates a blank image whose size is consistent with a size of a reference block. Then, the encoder side performs interpolation on the reference block based on a first correspondence and a split graphic motion vector map, to determine pixel values of all pixels in the blank image. Finally, the encoder side obtains the virtual reference frame based on the pixel values of all the pixels in the blank image.

The first decoded image includes one or more reference blocks corresponding to the first image. The first correspondence indicates a position mapping relationship between a pixel in the first image and a pixel in the second image in the overlapping area between the first image and the second image.

The encoder side performs interpolation on the reference block in the first decoded image based on the first correspondence, to obtain the virtual reference frame of the second image. The similarity between the virtual reference frame and the second image is higher than a similarity between the first decoded image and the second image. Therefore, the residual value between the virtual reference frame and the second image is reduced, and an amount of data of the image in the bitstream is reduced when image quality consistency is ensured. This improves encoding effect.

In a possible implementation, the first correspondence is obtained by using the following method: The encoder side first generates a blank image whose size is consistent with that of a source image. Then, the encoder side determines a second correspondence between a position of a pixel in a first graphic motion vector map and a position of a pixel in the blank image based on a size of a first graphic motion vector map and the size of the blank image. Finally, the encoder side performs interpolation on the graphic motion vector map by using an interpolation filter, to determine a pixel value and an offset of each pixel in the blank image.

When a size of the graphic motion vector is inconsistent with the size of the source image, the encoder side performs interpolation on the graphic motion vector map to obtain a graphic motion vector map obtained through interpolation. A size of the graphic motion vector map obtained through interpolation is consistent with a size of the first decoded image, and pixels of the graphic motion vector map obtained through interpolation match pixels of the first decoded image. The encoder side performs interpolation on the first decoded image based on the graphic motion vector map obtained through interpolation, to obtain a virtual reference frame. This improves a degree of matching between the virtual reference frame and the second image. When the encoder side encodes the second image based on the virtual reference frame, a residual value corresponding to the image is reduced, and compression performance is improved.

In a possible implementation, the video encoding method includes: The encoder side first determines a target discrete parameter of a pixel in the first decoded image based on a graphic motion vector map indicated in the rendering information. Second, the first type of filter on the encoder side performs interpolation on the reference block by using a first filter kernel, and calculates a first discrete parameter of a pixel in a virtual reference block obtained through interpolation on each channel. Third, the encoder side determines, from at least one first discrete parameter corresponding to all filter kernels, a first discrete parameter that has a smallest difference from the target discrete parameter, and uses a filter kernel corresponding to the first discrete parameter as a parameter of the first type of filter.

The target discrete parameter includes a target variance or a target covariance. The first discrete parameter includes a first variance or a first covariance. The first filter kernel is one of a plurality of specified filter kernels.

The encoder side determines the first discrete parameter that has a smallest difference from the target discrete parameter, and the encoder side uses the first filter kernel corresponding to the first discrete parameter as the parameter of the first type of filter. The encoder side performs interpolation on the first decoded image by using the first type of filter based on the parameter of the first type of filter, to obtain a virtual reference frame. A degree of matching between the virtual reference frame and the second image is improved. When the encoder side encodes the second image based on the virtual reference frame, a residual value corresponding to the second image is reduced, and an amount of data of the image in the bitstream is reduced. This improves compression performance.

In a possible implementation, the video encoding method further includes: The encoder side writes type information of the first type of filter into the bitstream.

The encoder side sends the type information of the first type of filter to a decoder side, so that the decoder side does not need to perform a processing process of determining the first type of filter based on the rendering information. This improves video decoding efficiency.

According to a second aspect, this application provides a video decoding method. The video decoding method may be applied to an encoding and decoding system or a decoder side that supports the encoding and decoding system in implementing the video decoding method. For example, the decoder side includes a video decoder. Herein, an example in which the decoder side performs the video decoding method provided in this embodiment is used for description. The video decoding method includes: The decoder side first obtains a bitstream and rendering information corresponding to the bitstream, where the bitstream includes a plurality of image frames. Second, the decoder side determines a first type of filter from a plurality of specified types of filters based on the rendering information. Third, the decoder side performs interpolation on a first decoded image corresponding to a first image frame by using the first type of filter, to obtain a virtual reference frame of a second image frame. Fourth, the decoder side decodes the second image frame based on the virtual reference frame, to obtain a second decoded image of the second image frame.

The rendering information indicates a processing parameter used in a process of generating the bitstream based on a plurality of source images, and the processing parameter indicates that a source image corresponding to the first image frame and a source image corresponding to the second image frame in the plurality of image frames have at least a partially overlapping area.

For example, the bitstream may be sent by an encoder side to the decoder side.

The decoder side selects the first type of filter from the plurality of specified types of filters based on the processing parameter indicated by the rendering information, and obtains the virtual reference frame of the second image frame by using the first type of filter, to avoid a problem that decoding effect is poor because a reference frame is obtained by processing the first decoded image by using a fixed filter. A degree of matching between the virtual reference frame and the source image corresponding to the second image frame is improved. When the decoder side decodes the second image frame based on the virtual reference frame, and a processing capability of the decoder side is consistent, an amount of data processed by the decoder side is reduced, and decoding efficiency is improved.

In a possible implementation, the first type of filter determined by the decoder side based on the rendering information includes: The decoder side queries a specified mapping table based on the rendering information, to obtain a filter corresponding to each processing parameter in the rendering information. In addition, the decoder side determines the first type of filter from all filters corresponding to the rendering information.

The mapping table indicates at least one type of filter that is in the plurality of types of filters and that corresponds to each processing parameter.

The decoder side queries the specified mapping table based on the rendering information and determines the first type of filter, where the first type of filter has a specific matching degree with a filter used by an image rendering engine. The decoder side performs interpolation on a reference frame by using the first type of filter, to obtain a virtual reference frame. A temporal-spatial correlation between the virtual reference frame and the second image frame is improved. In other words, a degree of matching between the virtual reference frame and the source image corresponding to the second image frame is improved. When the decoder side decodes the second image frame based on the virtual reference frame, an amount of processed data is reduced, and decoding efficiency is improved.

In a possible implementation, the mapping table further indicates a priority of each type of filter in the plurality of types of filters. That the decoder side determines the first type of filter from filters corresponding to the rendering information includes: The decoder side obtains priorities of all the filters corresponding to the rendering information; and the decoder side uses a filter with a highest filter priority in all the filters as the first type of filter.

The decoder side selects, from the mapping table based on the processing parameter included in the rendering information, the filter that corresponds to a processing parameter and that has the highest priority as the first type of filter. A degree of matching between the filter with the highest priority and the filter used by the image rendering engine is also the highest. The decoder side performs interpolation on the reference frame by using the filter with the highest matching degree, to obtain a virtual reference frame. A degree of matching between the virtual reference frame and the source image corresponding to the second image frame is higher. Therefore, when the decoder side performs decoding based on the virtual reference frame, an amount of processed data is reduced, and decoding efficiency is improved.

In a possible example, the rendering information includes one or a combination of a depth map, an albedo map, and a post-processing parameter.

For the foregoing example in which the rendering information includes the processing parameters, this application provides the first type of filter corresponding to each processing parameter or a step of determining the first type of filter. If the rendering information includes the depth map, the first type of filter is determined based on a relationship between a pixel in the depth map and edge information of an object in the depth map.

Alternatively, if the rendering information includes the albedo map, the first type of filter is determined based on a relationship between a pixel in the albedo map and edge information of an object in the albedo map.

Alternatively, if the post-processing parameter included in the rendering information includes an anti-aliasing parameter, the first type of filter is a filter indicated by the anti-aliasing parameter.

Alternatively, if the post-processing parameter included in the rendering information includes an instruction for execution of a motion blur module, the first type of filter is a bilinear filter.

Alternatively, the first type of filter is a Catmull-Rom filter.

For example, the edge information of the object in the depth map may be obtained in the following manner. For example, the decoder side performs sobel filtering on the depth map to obtain a filtering result. In addition, the decoder side performs an Otsu binarization on the filtering result, to obtain the edge information of the object in the depth map.

The decoder side determines, based on a correspondence between each processing parameter and a filter, the first type of filter corresponding to the rendering information, where the first type of filter has a specific matching degree with the filter used by the image rendering engine. The decoder side performs interpolation on the reference frame by using the first type of filter, to obtain the virtual reference frame. This improves a degree of matching between the virtual reference frame and the source image corresponding to the second image frame. When the decoder side decodes the second image frame based on the virtual reference frame, an amount of processed data is reduced, and decoding efficiency is improved.

In a possible implementation, before the decoder side performs interpolation on the first decoded image corresponding to the first image frame by using the first type of filter determined based on the rendering information, the video decoding method further includes: The decoder side obtains filter information; and the decoder side determines, based on a filter type and a parameter that are indicated in the filter information, the first type of filter and a filtering parameter corresponding to the first type of filter.

The filtering parameter indicates a processing parameter used in a process in which the decoder side obtains the virtual reference frame by using the first type of filter.

For example, after the encoder side determines the first type of filter and the filtering parameter corresponding to the first type of filter, the encoder side writes the first type of filter and the filtering parameter corresponding to the first type of filter into the bitstream, and sends the bitstream to the decoder side.

The decoder side directly obtains the first type of filter and the filtering parameter corresponding to the first type of filter, so that the decoder side does not need to perform a processing process of determining the first type of filter based on the rendering information. This improves video decoding efficiency.

In a possible implementation, that the decoder side performs interpolation on a first decoded image corresponding to a first image frame by using the first type of filter determined based on the rendering information, to obtain a virtual reference frame of a second image frame includes: The decoder side first generates a blank image whose size is consistent with a size of a reference block. Then, the decoder side performs interpolation on the reference block based on a first correspondence and a split graphic motion vector map, to determine pixel values of all pixels in the blank image. Finally, the decoder side obtains the virtual reference frame based on the pixel values of all the pixels in the blank image.

The first decoded image includes one or more reference blocks corresponding to the first image. The first correspondence indicates a position mapping relationship between a pixel in the source image corresponding to the first image frame and a pixel in the source image corresponding to the second image frame in the overlapping area between the source image corresponding to the first image frame and the source image corresponding to the second image frame.

The decoder side performs interpolation on the reference block in the first decoded image based on the first correspondence, to obtain the virtual reference frame of the second image. A similarity between the virtual reference frame and the second image frame is higher than a similarity between the first decoded image and the second image frame. When the decoder side decodes the second image frame based on the virtual reference frame, an amount of processed data is reduced, and decoding efficiency is improved.

In a possible implementation, the first correspondence is obtained by using the following method: The decoder first generates a blank image whose size is consistent with that of the first decoded image. Then, the decoder side determines a second correspondence between a position of a pixel in a first graphic motion vector map and a position of a pixel in the blank image based on a size ratio of the first graphic motion vector map to the blank image. Finally, the decoder side performs interpolation on the graphic motion vector map by using an interpolation filter, to determine a pixel value and an offset of each pixel in the blank image.

The size of the first decoded image is consistent with a size of the source image.

When a size of the graphic motion vector is inconsistent with the size of the first decoded image, the decoder side performs interpolation on the graphic motion vector map to obtain a graphic motion vector map obtained through interpolation. A size of the graphic motion vector map obtained through interpolation is consistent with the size of the first decoded image, and the graphic motion vector map obtained through interpolation matches the first decoded image. The decoder side performs interpolation on the first decoded image based on the graphic motion vector map obtained through interpolation, to obtain a virtual reference frame. This improves a degree of matching between the virtual reference frame and the second image frame. When the decoder side decodes the second image frame based on the virtual reference frame, an amount of processed data is reduced, and decoding efficiency is improved.

In a possible implementation, the video decoding method further includes: The decoder side first determines a target discrete parameter of a pixel in the first decoded image based on a graphic motion vector map indicated in the rendering information. Second, the first type of filter on the decoder side performs interpolation on the reference block by using a first filter kernel, and calculates a first discrete parameter of a pixel in a virtual reference block obtained through interpolation on each channel. Third, the decoder side determines, from at least one first discrete parameter corresponding to all filter kernels, a first discrete parameter that has a smallest difference from the target discrete parameter, and the decoder side uses a filter kernel corresponding to the first discrete parameter as a parameter of the first type of filter.

The target discrete parameter includes a target variance or a target covariance. The first discrete parameter includes a first variance or a first covariance. The first filter kernel is one of a plurality of specified filter kernels.

The decoder side determines the first discrete parameter that has a smallest difference from the target discrete parameter, and the decoder side uses the first filter kernel corresponding to the first discrete parameter as the parameter of the first type of filter. The decoder side performs interpolation on the first decoded image by using the first type of filter based on the parameter of the first type of filter, to obtain a virtual reference frame. A degree of matching between the virtual reference frame and the second image frame is improved. When the decoder side decodes the second image frame based on the virtual reference frame, an amount of processed data is reduced, and decoding efficiency is improved.

According to a third aspect, this application provides a video encoding apparatus. The video encoding apparatus is used in an encoder side, and is used in a video encoding and decoding system including the encoder side. The video encoding apparatus includes modules configured to perform the video encoding method according to any one of the first aspect or the optional implementations of the first aspect. For example, the video encoding apparatus includes a first obtaining module, a first interpolation module, and an encoding module. The first obtaining module is configured to obtain a source video and rendering information corresponding to the source video. The first interpolation module is configured to: determine a first type of filter based on the rendering information, and perform interpolation on a first decoded image by using the first type of filter, to obtain a virtual reference frame of a second image. The encoding module is configured to encode second image information based on the virtual reference frame of the second image.

The source video includes a plurality of source images. The rendering information indicates a processing parameter used in a process of generating a bitstream based on the plurality of source images, and the processing parameter indicates that a first image and the second image in the plurality of source images have at least a partially overlapping area. The first type of filter is one of a plurality of specified types of filters, the first decoded image is a reconstructed image obtained by encoding and then decoding the first image in the plurality of images, and the first image is encoded before the second image.

For more detailed implementation content of the video encoding apparatus, refer to the descriptions of any implementation of the second aspect and content of the following specific implementations. Details are not described herein again.

According to a fourth aspect, this application provides a video decoding apparatus. The video decoding apparatus is used in a decoder side, and is used in a video encoding and decoding system including the decoder side. The video decoding apparatus includes modules configured to perform the video decoding method according to any one of the second aspect or the optional implementations of the second aspect. For example, the video decoding apparatus includes a second obtaining module, a second interpolation module, and a decoding module. The second obtaining module is configured to obtain a bitstream and rendering information corresponding to the bitstream. The second interpolation module is configured to: determine a first type of filter based on the rendering information, and perform interpolation on a first decoded image corresponding to a first image frame by using the first type of filter, to obtain a virtual reference frame of a second image frame. The decoding module is configured to decode the second image frame based on the virtual reference frame, to obtain a second decoded image corresponding to the second image frame.

The bitstream includes a plurality of image frames. The rendering information indicates a processing parameter used in a process of generating the bitstream based on a plurality of source images, and the processing parameter indicates that a source image corresponding to the first image frame and a source image corresponding to the second image frame in the plurality of image frames have at least a partially overlapping area. The first type of filter is one of a plurality of specified types of filters.

For more detailed implementation content of the video decoding apparatus, refer to the descriptions of any implementation of the first aspect and content of the following specific implementations. Details are not described herein again.

According to a fifth aspect, this application provides a chip, including a processor and a power supply circuit. The power supply circuit is configured to supply power to the processor. The processor is configured to perform the method according to any one of the first aspect and the possible implementations of the first aspect; and/or the processor is configured to perform the method according to any one of the second aspect and the possible implementations of the second aspect.

According to a sixth aspect, this application provides a codec, including a memory and a processor. The memory is configured to store computer instructions. When executing the computer instructions, the processor implements the method according to any one of the first aspect and the possible implementations of the first aspect; and/or when executing the computer instructions, the processor implements the method according to any one of the second aspect and the possible implementations of the second aspect.

According to a seventh aspect, this application provides an encoding and decoding system, including an encoder side and a decoder side. The encoder side is configured to encode a plurality of images based on rendering information corresponding to the plurality of source images, to obtain a bitstream corresponding to the plurality of images, to implement the method according to any one of the first aspect and the possible implementations of the first aspect.

The decoder side is configured to decode the bitstream based on the rendering information corresponding to the plurality of source images, to obtain a plurality of decoded images, to implement the method according to any one of the second aspect and the possible implementations of the second aspect.

According to an eighth aspect, this application provides a computer-readable storage medium. The storage medium stores a computer program or instructions. When the computer program or the instructions are executed by a processing device, the method according to any one of the first aspect or the optional implementations of the first aspect is implemented; and/or when the computer program or the instructions are executed by a processing device, the method according to any one of the second aspect or the optional implementations of the second aspect is implemented.

According to a ninth aspect, this application provides a computer program product. The computer program product includes a computer program or instructions. When the computer program or the instructions are executed by a processing device, the method according to any one of the first aspect or the optional implementations of the first aspect is implemented; and/or when the computer program or the instructions are executed by a processing device, the method according to any one of the second aspect or the optional implementations of the second aspect is implemented.

For beneficial effect of the third aspect to the ninth aspect, refer to the descriptions of any one of the first aspect or the implementations of the first aspect, or any one of the second aspect or the implementations of the second aspect. Details are not described herein again. In this application, on the basis of the implementations according to the foregoing aspects, the implementations may be further combined to provide more implementations.

### BRIEF DESCRIPTION OF DRAWINGS

FIG. 1 is an example block diagram of a video encoding and decoding system according to this application;
FIG. 2 is a diagram of a structure of a video encoder according to this application;
FIG. 3 is a diagram of a structure of a video decoder according to this application;
FIG. 4 is a schematic flowchart of a temporal anti-aliasing method according to this application;
FIG. 5 is a schematic flowchart of a video encoding method according to this application;
FIG. 6 is a diagram of a reference block interpolation method according to this application;
FIG. 7 is a diagram of a graphic motion vector interpolation method according to this application;
FIG. 8 is a schematic flowchart of video decoding according to this application;
FIG. 9 is a diagram of a structure of a video encoding apparatus according to this application;
FIG. 10 is a diagram of a structure of a video decoding apparatus according to this application; and
FIG. 11 is a diagram of a structure of a computer device according to this application.

### DESCRIPTION OF EMBODIMENTS

In this application, an encoder side determines a first type of filter from a plurality of specified types of filters, and the first type of filter matches a filter used in an image rendering process. This helps improve a similarity between a virtual reference frame determined by the encoder side by using the first type of filter and a second image. Therefore, when the encoder side encodes the second image based on the virtual reference frame, a residual value corresponding to the second image is reduced, and an amount of data corresponding to the second image in a bitstream is reduced. This improves compression performance and video encoding efficiency.

A decoder side selects a first type of filter from a plurality of specified types of filters based on a processing parameter indicated by rendering information, and obtains a virtual reference frame of a second image frame by using the first type of filter, to avoid a problem that decoding efficiency is low because a reference frame is obtained by processing a decoded image by using a fixed filter. A degree of matching between the virtual reference frame and a source image corresponding to a to-be-decoded image is improved. When the decoder side decodes the second image frame based on the virtual reference frame, and a processing capability of the decoder side is consistent, an amount of data processed by the decoder side is reduced, and video decoding efficiency is improved.

The following describes solutions provided in this application with reference to embodiments. For clear and brief description of the following embodiments, a brief description of a related technology is first provided.

Video encoding (video encoding) is a processing process of compressing a plurality of frames of images included in a video into a bitstream.

Video decoding (video decoding) is a processing process of restoring a bitstream to a plurality of frames of reconstructed images according to a specific syntax rule and processing method.

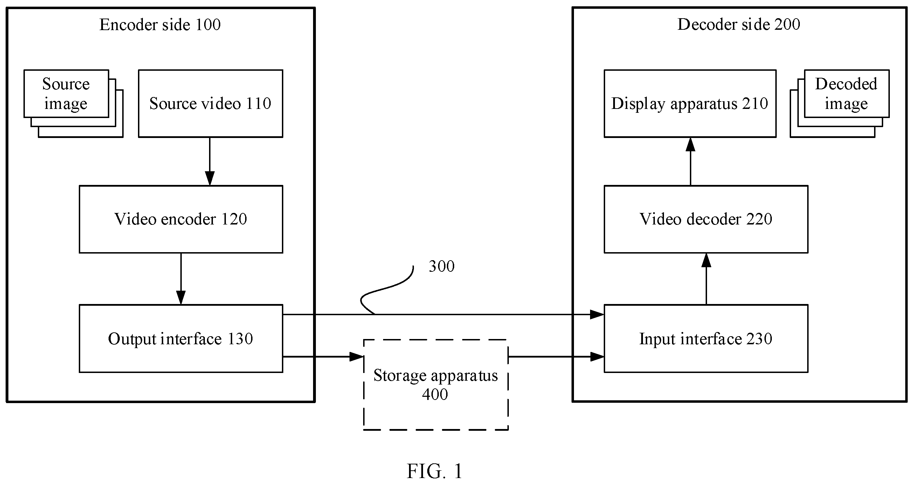

To implement video encoding and decoding, this application provides a video encoding and decoding system. FIG. 1 is an example block diagram of a video encoding and decoding system according to this application. The video encoding and decoding system includes an encoder side 100 and a decoder side 200. The encoder side 100 generates encoded video data (or referred to as a bitstream). Therefore, the encoder side 100 may be referred to as a video encoding apparatus. The decoder side 200 may decode a bitstream (for example, a video including one or more image frames) generated by the encoder side 100. Therefore, the decoder side 200 may be referred to as a video decoding apparatus. Various implementations of the encoder side 100, the decoder side 200, or both may include one or more processors and a memory coupled to the one or more processors. The memory may include but is not limited to a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a flash memory, or any other medium that can be used to store desired program code in a form of instructions or a data structure and that can be accessed by a computer.

In the example of FIG. 1, the encoder 100 includes a source video 110, a video encoder 120, and an output interface 130. In some examples, the output interface 130 may include a modulator/demodulator (a modem) and/or a transmitter. The source video 110 may include a video capture apparatus (for example, a video camera), a video archive including previously captured video data, a video feed-in interface for receiving video data from a video content provider, and/or a computer graphics system for generating video data, for example, an image rendering engine, or a combination of the foregoing video sources.

The video encoder 120 may encode video data from the source video 110. In some examples, the encoder side 100 directly transmits a bitstream to the decoder side 200 through the output interface 130 via a link 300. In another example, the bitstream may be further stored in a storage apparatus 400 for later access by the decoder side 200 for decoding and/or playing.

In the example in FIG. 1, the decoder side 200 includes an input interface 230, a video decoder 220, and a display apparatus 210. In some examples, the input interface 230 includes a receiver and/or a modem. The input interface 230 may receive encoded video data via the link 300 and/or from the storage apparatus 400. The display apparatus 210 may be integrated with the decoder side 200 or may be outside the decoder side 200. In general, the display apparatus 210 displays decoded video data. The display apparatus 210 may include a plurality of types of display apparatuses, for example, a liquid crystal display (liquid crystal display, LCD), a plasma display, an organic light-emitting diode (organic light-emitting diode, OLED) display, or another type of display apparatus.

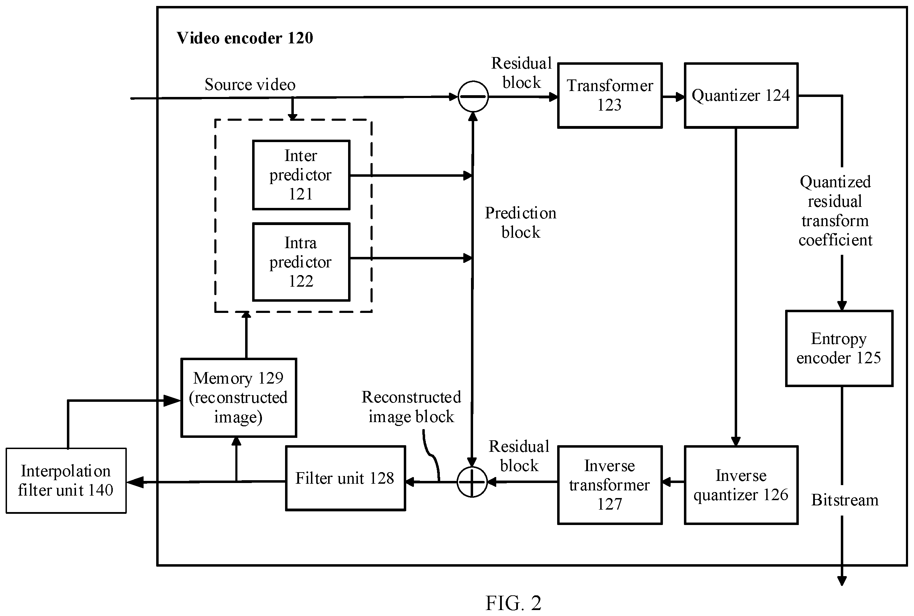

Based on the video encoding and decoding system shown in FIG. 1, this application provides a possible video encoder. FIG. 2 is a diagram of a structure of a video encoder according to this application.

The video encoder 120 includes an inter predictor 121, an intra predictor 122, a transformer 123, a quantizer 124, an inverse quantizer 126, an inverse transformer 127, a filter unit 128, and a memory 129. The inverse quantizer 126 and the inverse transformer 127 are configured to reconstruct an image block. The filter unit 128 is configured to indicate one or more loop filters, such as a deblocking filter, an adaptive loop filter, and a sample adaptive offset filter.

The memory 129 may store video data encoded by a component of the video encoder 120. The video data stored in the memory 129 may be obtained from the source video 110. The memory 129 may be a reference image memory that stores reference video data used by the video encoder 120 to encode the video data in an intra or inter coding mode. The memory 129 may be a dynamic random access memory (dynamic RAM, DRAM), a magnetic RAM (magnetic RAM, MRAM), a resistive RAM (resistive RAM, RRAM), or a memory apparatus of another type.

For a video encoding procedure, the following describes a working procedure of the video encoder with reference to content in FIG. 2.

After the inter predictor 121 and the intra predictor 122 generate a prediction block of a current image block (or referred to as a second image) based on source data (a source video), the video encoder 120 subtracts the prediction block from the to-be-encoded current image block to form a residual image block. Residual video data in the residual block may be included in one or more transform units (transform units, TUs), and used by the transformer 123. The transformer 123 transforms the residual video data into a residual transform coefficient through transform such as discrete cosine transform or conceptually similar transform. The transformer 123 may transform the residual video data from a pixel value domain to a transform domain, for example, a frequency domain.

The transformer 123 may send a resulting transform coefficient to the quantizer 124. The quantizer 124 quantizes the transform coefficient to further reduce a bit rate. In some examples, the quantizer 124 may then perform scanning of a matrix including a quantized residual transform coefficient. Alternatively, the entropy encoder 125 may perform scanning.

After quantization, the entropy encoder 125 performs entropy encoding on the quantized transform coefficient. For example, the entropy encoder 125 may perform context-adaptive variable-length coding (CAVLC), context-adaptive binary arithmetic coding (CABAC), syntax-based context-adaptive binary arithmetic coding (SBAC), probability interval partitioning entropy (PIPE) coding, or another entropy encoding method or technology. After performing entropy encoding, the entropy encoder 125 may transmit an encoded bitstream to the video decoder, or archive an encoded bitstream for subsequent transmission or for subsequent retrieval by the video decoder. The entropy encoder 125 may further perform entropy encoding on a syntax element of the to-be-encoded current image block.

The inverse quantizer 126 and the inverse transformer 127 respectively perform inverse quantization and inverse transform, to reconstruct the residual block in pixel domain, for example, to be subsequently used as a reference block of a reference image. The video encoder 120 adds the reconstructed residual block to the prediction block generated by the inter predictor 121 or the intra predictor 122, to generate a reconstructed image or a reconstructed image block. The filter unit 128 is applicable to the reconstructed image block to reduce distortion, for example, a block artifact (block artifact). Then, the reconstructed image or the reconstructed image block is stored in the memory 129 as a reference block (or referred to as a first decoded image), and may be used by the inter predictor 121 as a reference block to perform inter prediction on a block in a subsequent video frame or image.

As shown in FIG. 2, the video encoder 120 is further externally connected to an interpolation filter unit 140. The interpolation filter unit 140 is configured to: perform interpolation on the first decoded image to obtain a virtual reference frame, and store the virtual reference frame in the memory 129. The video encoder 120 uses the virtual reference frame to assist in encoding the second image. A filter in the interpolation filter unit is determined by the encoder 100 based on obtained prior information, and the prior information may be a processing parameter used in a process of performing rendering by using a computer image rendering technology to obtain the source video. A similarity between the virtual reference frame and the second image is higher than a similarity between the first decoded image and the second image.

In a possible case, the interpolation filter unit 140 may be disposed inside the video encoder 120.

It should be understood that other structural variations of the video encoder 120 can be used for encoding a video stream. For example, for some image blocks or image frames, the video encoder 120 may directly quantize a residual signal, processing by the transformer 123 is not required, and correspondingly, processing by the inverse transformer 127 is not required either. Alternatively, for some image blocks or image frames, the video encoder 120 does not generate residual data, and correspondingly, processing by the transformer 123, the quantizer 124, the inverse quantizer 126, and the inverse transformer 127 is not required. Alternatively, the video encoder 120 may directly store the reconstructed image block as the reference block, and processing by the filter unit 128 is not required. Alternatively, the quantizer 124 and the inverse quantizer 126 in the video encoder 120 may be combined.

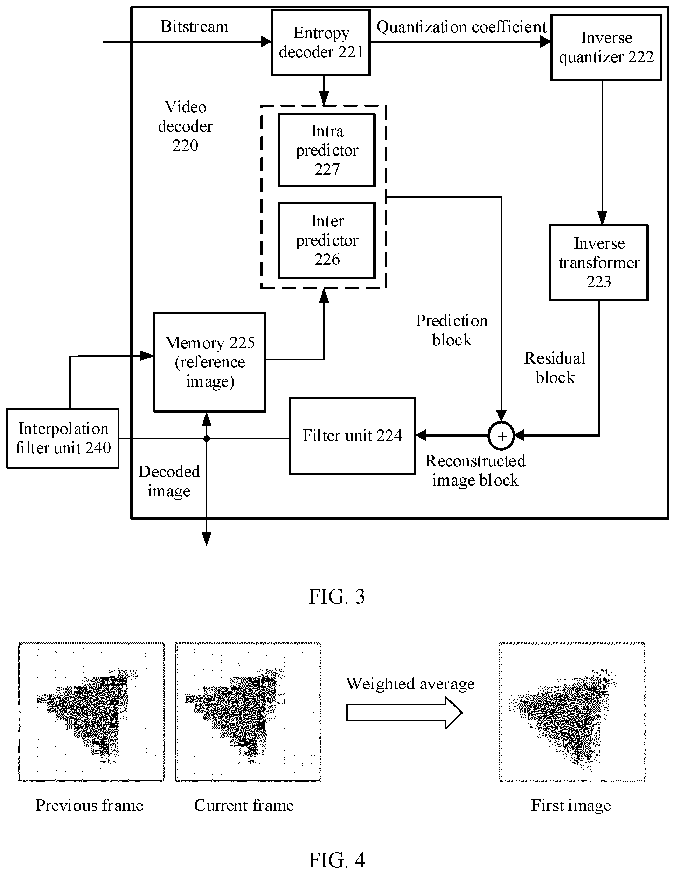

FIG. 3 is a diagram of a structure of a video decoder according to an embodiment of this application. The video decoder 220 includes an entropy decoder 221, an inverse quantizer 222, an inverse transformer 223, a filter unit 224, a memory 225, an inter predictor 226, and an intra predictor 227. The video decoder 220 may perform a decoding process that is substantially inverse to the encoding process described with respect to the video encoder 120 in FIG. 2. A residual block or a residual value is first obtained through the entropy decoder 221, the inverse quantizer 222, and the inverse transformer 223, and a bitstream is decoded to determine whether intra prediction or inter prediction is used for a current image block. If intra prediction is performed, the intra predictor 227 constructs prediction information based on a pixel value of a pixel in a surrounding reconstructed area according to a used intra prediction method. If inter prediction is performed, the inter predictor 226 needs to obtain motion information through parsing, determine a reference block in a reconstructed image based on the motion information obtained through parsing, and use a pixel value of a pixel in the block as prediction information. Reconstructed information can be obtained by performing a filtering operation on the prediction information and residual information.

In addition, the video decoder 220 is further externally connected to an interpolation filter unit 240. For a function of the interpolation filter unit 240, refer to the foregoing content of the interpolation filter unit 140 externally connected to the video decoder 120. Details are not described herein again.

In a possible case, the interpolation filter unit 240 may be disposed inside the video encoder 220.

Optionally, the foregoing source video is obtained by performing rendering on input data by a rendering side. The input data herein is data obtained by a display device that communicates with the rendering side, or the input data is data received by the rendering side.

For example, the rendering side includes an image rendering engine (for example, V-Ray, Unreal, or Unity). In a process in which the image rendering engine performs rendering on the input data, process map data and parameter information are generated.

The process map data includes a rendered image generated when the rendering side processes the input data, an intermediate map between the input data and the rendered image, and the like. For example, the intermediate map may include but is not limited to a graphic motion vector map, a low-quality rendering result, a depth map, a position map (position map), a normal map (normal map), an albedo map (albedo map), a specular intensity map (specular intensity map), and the like.

The parameter information in the foregoing rendering process is a post-processing parameter used by the rendering side to perform post-processing on the rendered image, for example, a mesh ID, a material ID, a motion blur parameter, and an anti-aliasing parameter.

It should be noted that the foregoing process map data and parameter information may also be collectively referred to as intermediate data corresponding to the source video, rendering information used when the encoder side encodes the source video, or the like.

In a possible example, the image rendering engine on the decoder side 200 may perform image rendering based on the input data of the display side, to obtain one or more of the process map data and the parameter information. Because the decoder side 200 obtains all or a part of the intermediate data, the encoder side 100 is prevented from sending all the intermediate data to the decoder side 200, so that an amount of intermediate data transmitted by the encoder side 100 to the decoder side 200 is reduced, and bandwidth is saved.

For example, the input data of the display side may be one or more of a camera (angle of view) position, a light source position/intensity/color, and the like. The input data of the rendering side may be one or more of object geometry, an initial position of an object, light source information, and the like. The graphic motion vector map is an image indicating a position correspondence between pixels in two frames of images in the source video. The motion blur parameter is an instruction for execution of motion blur by the image rendering engine. The anti-aliasing parameter is a filtering manner used when the image rendering engine performs TAA.

Optionally, the image rendering engine may further perform post-processing on the rendered image. The following uses an example in which post-processing indicates anti-aliasing processing for description.

The rendering side performs temporal anti-aliasing (temporal anti-aliasing, TAA) processing on the rendered image, to obtain a plurality of images included in the source video, to resolve an aliasing problem of the rendered image. FIG. 4 is a schematic flowchart of a temporal anti-aliasing method according to this application. A difference between a plurality of frames of rendered images is small. For example, only positions of a few pixels (for example, one or two pixels) between a previous frame and a current frame are offset. A first pixel in the current frame is used as an example. The rendering side determines, based on the graphic motion vector map, a second pixel that is in a previous frame of the current frame and that corresponds to the first pixel, and the rendering side performs weighted averaging on a pixel value of the first pixel and a pixel value of the second pixel, to obtain a final pixel value. The rendering side fills the first pixel in the current frame with the final pixel value, to determine a pixel value of each pixel in a first image, to obtain the first image. The first pixel is any one of all pixels in the current frame.

The rendering side may be the encoder side 100, and the encoder side 100 may be on a cloud server. The display side may be the decoder side 200, and the decoder side 200 may be on a client.

That the rendering side determines the pixel value of the second pixel may include: The encoder side 100 filters the second pixel or a pixel (for example, a 3x3 pixel range) around the second pixel by using a filter, to obtain the pixel value of the second pixel. A filtering manner of the filter may be one of mean filtering, median filtering, Gaussian filtering, and the like.

To reduce load on a terminal side (for example, the display side or the decoder side), the image rendering engine may be deployed on a cloud side (for example, a cloud-side server or a cloud-side encoder side). The encoder side 100 performs image rendering on a plurality of images to obtain a source video, and encodes the source video to obtain a bitstream. In addition, the encoder side 100 transmits the bitstream to the decoder side 200, and the decoder side 200 decodes the bitstream for playing.

In a possible scenario, in a cloud game scenario, the encoder side 100 processes a plurality of images by using the image rendering engine to obtain a game picture, and encodes the game picture to obtain a bitstream, to reduce an amount of data of transmitted game pictures. The decoder side 200 decodes the bitstream for playing. A user operates a game on the decoder side 200 (for example, a mobile device).

The following describes specific implementations of an image encoding method provided in this embodiment in detail with reference to accompanying drawings.

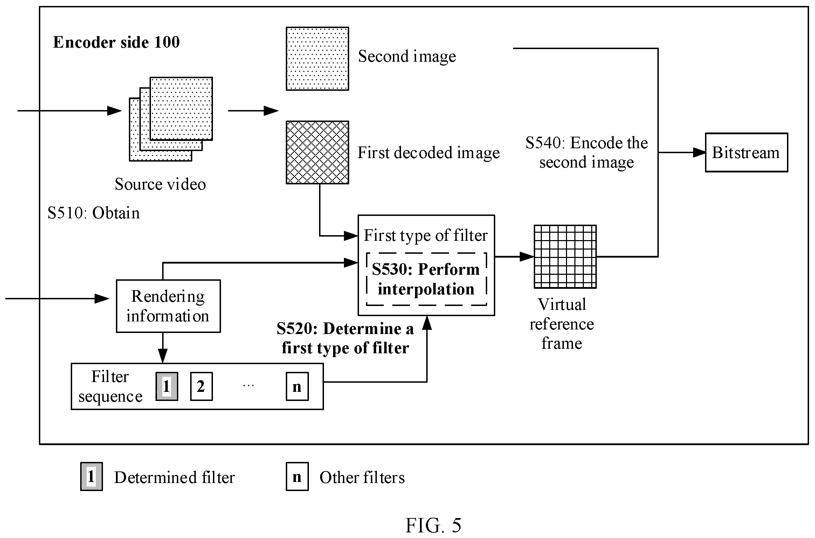

Because the encoder side 100 and the decoder side 200 are respectively located on a cloud server and a client, after the encoder side 100 compresses a source video to obtain a bitstream, the encoder side 100 sends the bitstream to the decoder side 200, to improve data transmission efficiency. Therefore, this application provides a video encoding method. FIG. 5 is a schematic flowchart of a video encoding method according to this application. The video encoding method may be applied to the video encoding and decoding system shown in FIG. 1 or the video encoder shown in FIG. 2. For example, the video encoding method may be performed by the encoder side 100 or the video encoder 120. Herein, an example in which the encoder side 100 performs the image encoding method provided in this embodiment is used for description. As shown in FIG. 5, the image encoding method provided in this embodiment includes the following step S510 to step S540.

S510: The encoder side 100 obtains a source video and rendering information corresponding to the source video.

The source video includes a plurality of source images. For more content of the source video, refer to the descriptions in the foregoing embodiments. Details are not described herein again.

The rendering information indicates a processing parameter used in a process in which the encoder side 100 generates a bitstream based on the plurality of source images in the source video. The processing parameter may include at least one of the foregoing process map data and parameter information. In addition, a graphic motion vector map in the processing parameter indicates that a first image and a second image in the plurality of source images have at least a partially overlapping area, and pixels in the overlapping area have a position correspondence.

S520: The encoder side 100 determines a first type of filter based on the rendering information.

The first type of filter is one of a plurality of specified types of filters.

The encoder side 100 may determine the first type of filter from the specified filters based on a correspondence between the processing parameter in the rendering information and the specified filters.

For example, the rendering information obtained by the encoder side 100 may include one or a combination of a plurality of processing parameters shown in Table 1 below. Table 1 shows at least one of a plurality of types of filters corresponding to each processing parameter.

**Table 1**

| Priority | Processing parameter | Filter |
|---|---|---|
| 1 | Depth map | Catmull-Rom filter/Bilinear filter |
| 2 | Albedo map | Catmull-Rom filter/B-spline filter |
| 3 | Anti-aliasing parameter | Filter used for TAA |
| 4 | Motion blur parameter | Bilinear filter |
| 5 | / | Catmull-Rom filter |

The anti-aliasing parameter and the motion blur parameter are content included in a post-processing parameter. A filter corresponding to a priority of 5 is an alternative filter. When the rendering information does not include the depth map, the albedo map, the anti-aliasing parameter, and the post-processing parameter, a Catmull-Rom filter corresponding to the priority of 5 is directly used as the first type of filter. For example, a higher priority corresponding to a filter indicates a higher degree of matching between the filter and a filter used by an image rendering engine. The encoder side 100 performs interpolation on a reference frame by using the filter with the high matching degree, to obtain a virtual reference frame. A temporal-spatial correlation between the virtual reference frame and the second image is improved, and the encoder side 100 determines a prediction block based on the virtual reference frame. A similarity between the prediction block and an image block corresponding to the second image is improved. This improves encoding effect, reduces an amount of data obtained through encoding, and improves compression performance.

Table 1 is merely an example provided in this application, and should not be understood as a limitation on this application. In some cases, Table 1 further includes more processing parameters, and the processing parameter may correspond to one or more filters, a priority corresponding to the filter may be before or after a priority corresponding to a filter shown in Table 1. For example, the processing parameter in Table 1 may further include a normal map, a filter corresponding to the normal map is a Mitchell-Netravali filter, and a priority of the Mitchell-Netravali filter is before a priority corresponding to the filter used for the TAA.

In a possible case, the encoder side 100 queries a mapping table in Table 1 based on the rendering information, to obtain a filter corresponding to each processing parameter in the rendering information. The encoder side 100 determines the first type of filter from all filters corresponding to the rendering information.

The mapping table indicates the filter corresponding to each processing parameter in the rendering information, and a correspondence between the processing parameter and the filter is determined based on a filter used in each processing process of the image rendering engine. The encoder side 100 queries the foregoing mapping table based on the obtained processing parameter, to determine the first type of filter. The first type of filter matches the filter used by the image rendering engine, so that a temporal-spatial correlation between the virtual reference frame obtained by the encoder side 100 by using the first type of filter and the second image is improved, and a residual value that is of the second image and that is determined by the encoder side 100 based on the virtual reference frame is reduced. This improves encoding effect.

For the encoder side 100 determining the first type of filter based on the processing parameter included in the rendering information, the following provides three possible examples.

In a first possible example, the rendering information obtained by the encoder side 100 includes only the anti-aliasing parameter.

The encoder side 100 queries Table 1 based on the anti-aliasing parameter, to obtain the filter used for the TAA corresponding to the anti-aliasing parameter. Because the rendering information includes only the anti-aliasing parameter, the filter used for the TAA is directly used as the first type of filter.

In a second possible example, the rendering information obtained by the encoder side 100 includes the depth map and the anti-aliasing parameter.

The encoder side 100 queries Table 1 based on the depth map and the anti-aliasing parameter, and learns, based on a priority of each type of filter in the plurality of types of filters indicated in Table 1, that a filter priority corresponding to the depth map and a filter priority corresponding to the anti-aliasing parameter are respectively 1 and 3. The encoder side 100 selects a filter with a highest priority, namely, a "Catmull-Rom filter/Bilinear filter" whose priority is 1. The encoder side 100 determines one filter from the "Catmull-Rom filter/Bilinear filter" as the first type of filter.

For the process in which the encoder side 100 determines one filter from the "Catmull-Rom filter/Bilinear filter" as the first type of filter, the following provides a possible implementation. Details are not described herein.

The encoder side 100 selects, from the mapping table based on the processing parameter included in the rendering information, the filter that corresponds to a processing parameter and that has the highest priority as the first type of filter. A degree of matching between the filter with the highest priority and the filter used by the image rendering engine is also the highest. The encoder side 100 performs interpolation on the reference frame by using the filter with the highest matching degree, to obtain the virtual reference frame. A temporal-spatial correlation between the virtual reference frame and the second image is improved, and the residual value that corresponds to the second image and that is obtained by the encoder side 100 based on the virtual reference frame is reduced. This improves encoding effect, reduces an amount of data obtained through encoding, and improves compression performance.

In a third possible example, the encoder side 100 obtains the depth map and the anti-aliasing parameter included in the rendering information.

The encoder side 100 obtains all filters corresponding to the depth map and the anti-aliasing parameter, and the encoder side separately precodes the second image by using all the filters. Each filter in all the filters obtains a corresponding prediction result. The encoder side 100 selects, from all prediction results, a target prediction result that meets a specified condition, and uses a filter corresponding to the target prediction result as the first type of filter.

The prediction result indicates encoding information obtained by precoding the second image by using the filter, and the encoding information includes at least one of a prediction bit rate and a distortion rate of the second image.

For example, the foregoing precoding is a process of performing inter prediction on the second image to obtain a prediction block of the second image, obtaining a residual value or a residual block of the second image based on the prediction block, and then performing transform processing. The encoder side 100 obtains corresponding prediction bit rates and distortion rates after performing precoding by using all the foregoing filters. The foregoing specified condition may be a prediction result in which the distortion rate is the smallest when the prediction bit rate reaches a specified value, or a prediction result in which the prediction bit rate is the smallest when the distortion rate is less than a specified value.

The encoder side performs precoding by using all the filters corresponding to the processing parameters in the rendering information. The encoder side filters, based on the specified condition, prediction results obtained through precoding, and uses a filter corresponding to the target prediction result that meets the specified condition as the first type of filter, so that a filter that actually meets the preset condition in all the filters is determined as the first type of filter, and a similarity between the virtual reference frame obtained by the encoder side 100 through interpolation by using the first type of filter and the second image is the highest. In the process in which the encoder side 100 encodes the second image, because the similarity between the virtual reference frame and the second image is the highest, an optimal balance is achieved between a bit rate and a distortion rate that are determined when the encoder side 100 encodes the second image based on the virtual reference frame. This improves encoding compression effect.

In a possible case, when a TAA algorithm of the image rendering engine on the encoder side 100 is determined, the first type of filter is preset on the encoder side 100.

Still refer to FIG. 5. The video encoding method provided in this embodiment further includes step S530.

S530: The encoder side 100 performs interpolation on a first decoded image by using the first type of filter, to obtain a virtual reference frame of the second image.

The first decoded image is a reconstructed image obtained by encoding and then decoding the first image in the plurality of images, and the reconstructed image is an image obtained through processing by the filter unit 128 in FIG. 2. The first image is encoded before the second image. The first decoded image includes one or more reference blocks corresponding to the first image. For example, the first decoded image includes MxN reference blocks, and both M and N are integers greater than or equal to 1. For content of an obtained reconstructed image, refer to the descriptions shown in FIG. 2. Details are not described herein again. The obtained virtual reference frame may be stored in the memory 129 in FIG. 2.

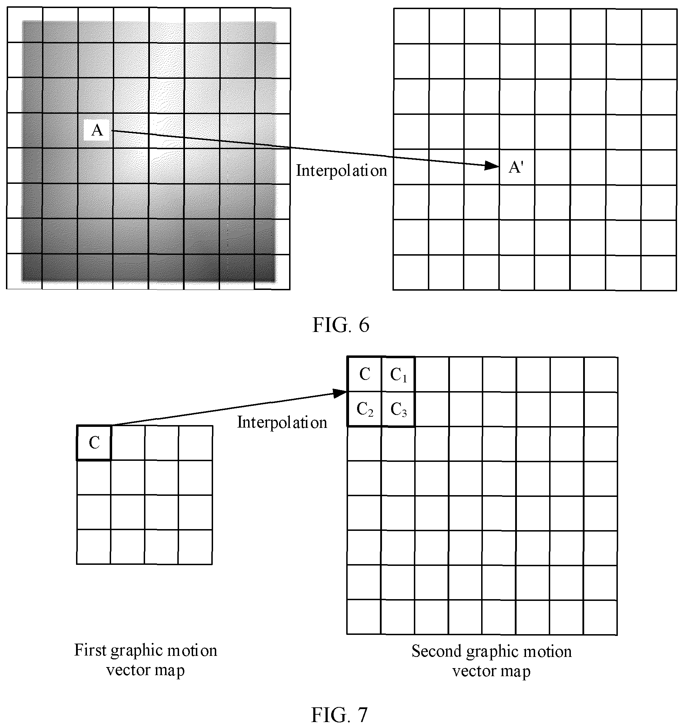

The following provides a possible specific example. An example in which the encoder side performs interpolation on any reference block included in the first decoded image is used for description. FIG. 6 is a diagram of a reference block interpolation method according to this application. The method includes the following step 1 to step 3.

Step 1: The encoder side 100 generates a blank image whose size is consistent with a size of the reference block.

When a size of the graphic motion vector map is consistent with a size of the first decoded image, the encoder side 100 directly generates the blank image whose size is consistent with the size of the reference block, and splits the graphic motion vector map into MxN images, so that a size of an image obtained through splitting is consistent with the size of the reference block. When both M and N are 1, the encoder side 100 does not split the graphic motion vector map. Sizes of the first decoded image, the first image, and the second image are the same.

When a size of the graphic motion vector map is inconsistent with a size of the first decoded image, the encoder side 100 performs interpolation on the graphic motion vector map, so that a size of a graphic motion vector map obtained through interpolation is consistent with the size of the first decoded image.

For an implementation in which the encoder side 100 performs interpolation on the graphic motion vector map, FIG. 7 provides a possible implementation. Details are not described herein.

Step 2: The encoder side 100 performs interpolation on the reference block based on a first correspondence and a split graphic motion vector map, to determine pixel values of all pixels in the blank image.

The first correspondence indicates that the first image and the second image that are indicated by the graphic motion vector map in the rendering information have at least a partially overlapping area, and indicates a position mapping relationship between a pixel in the first image and a pixel in the second image in the partially overlapping area.

Because the first decoded image is obtained by encoding and then decoding the first image, there is a position correspondence between a pixel in the first decoded image and a pixel in the first image. A size of the blank image obtained in the first step is the same as the size of the reference block. Therefore, it may be understood that a position of a pixel in the blank image corresponds to a position of a pixel of a corresponding image block in the second image. Based on the position mapping relationship between the pixel in the first image and the pixel in the second image, there is a position correspondence between a pixel in the reference block and a pixel in the blank image.

The encoder side 100 performs interpolation filtering on each pixel in the reference block based on a correspondence between a position of a pixel in the reference block and a position of a pixel in the blank image by using the first type of filter, to determine a pixel value corresponding to each pixel position in the blank image, and further obtain pixel values of all pixels in the virtual reference block.

For example, a position mapping relationship between a pixel A in the reference block and a pixel A' in the blank image in the first correspondence is used as an example for description. As shown in FIG. 6, the encoder side 100 obtains a correspondence between a position of a pixel in the reference block and a position of a pixel in the blank image based on the position mapping relationship between the pixel in the first image and the pixel in the second image. For example, there is a position correspondence between the pixel A in the reference block and the pixel A' in the blank image. The encoder side 100 performs interpolation filtering on the pixel A or the pixel A and pixels around the pixel A by using the first type of filter, to obtain a corresponding pixel value. Then, the encoder side 100 fills the pixel value into the pixel A' in the blank image, to obtain a color of the pixel A'.

The encoder side 100 calculates a pixel value of each pixel in the blank image according to the foregoing processing steps of the pixel A', to obtain pixel values of all pixels in the blank image.

Step 3: The encoder side 100 obtains the virtual reference frame based on the pixel values of all the pixels in the blank image.

The encoder side 100 fills the pixel values of all the pixels in the blank image into corresponding pixels in the blank image, to obtain a virtual reference block. The encoder side 100 performs processing in the foregoing step 1 and step 2 on each reference block included in the first decoded image, to obtain pixel values of all pixels in a blank image corresponding to each reference block. In this way, a corresponding virtual reference block is obtained. The encoder side 100 integrates the virtual reference blocks to obtain the virtual reference frame. When the encoder side processes each reference block included in the first decoded image in the foregoing step 1 and step 2, different first types of filters may be used. For example, different first types of filters are used for different reference blocks.

The encoder side performs interpolation on the reference block in the first decoded image based on the first correspondence, to obtain the virtual reference frame of the second image. The similarity between the virtual reference frame and the second image is higher than a similarity between the first decoded image and the second image. Therefore, the residual value between the virtual reference frame and the second image is reduced, and an amount of data of the image in the bitstream is reduced when image quality consistency is ensured. This improves encoding effect.

Still refer to FIG. 5. The video encoding method provided in this embodiment further includes step S540.

S540: The encoder side 100 encodes the second image based on the virtual reference frame of the second image, to obtain a bitstream corresponding to the second image.

The encoder side 100 performs inter prediction based on the virtual reference frame of the second image, to determine a prediction frame corresponding to the second image. The prediction frame includes a plurality of prediction blocks. The encoder side 100 obtains a corresponding residual value (or referred to as a residual block) based on an image block in the second image and a corresponding prediction block, and determines a motion vector (motion vector, MV) of the image block in the second image and the corresponding prediction block. The encoder side 100 encodes the residual value and the motion vector, to encode the second image to obtain the corresponding bitstream.

For a process in which the encoder side 100 determines a plurality of prediction blocks corresponding to the second image, this application provides the following possible examples.

In a possible example, the encoder side 100 determines, from the memory 129 by using the inter predictor 121 in the video encoder 120 shown in FIG. 2, a reference block that has a highest matching degree with the image block in the second image as a prediction block of the second image.

The reference block with the highest matching degree includes a virtual reference block.

For example, the encoder side 100 may perform image block search according to a full search (full search, FS) method or a fast search method, and then the encoder side 100 calculates a degree of matching between a searched reference block and the image block in the second image according to a method like a mean-square error (mean-square error, MSE) method and a mean absolute error (mean absolute deviation, MAD) method. In this way, the reference block with the highest matching degree is obtained.

For the encoder side 100 determining the motion vector of the image block in the second image and the corresponding prediction block, this application provides the following possible examples.

In a possible example, the encoder side 100 determines a relative displacement between the image block and the prediction block based on a position of the image block in the second image and a position of the prediction block in a corresponding reference frame, where the relative displacement is a motion vector of the image block. For example, if the motion vector is (1, 1), it indicates that the position of the image block in the second image is moved by (1, 1) relative to the position of the prediction block in the corresponding reference frame.

In a possible case, the encoder side 100 may send type information of the first type of filter to the decoder side 200. The type information indicates, for example, a Catmull-Rom filter, a bilinear filter, or a B-spline filter.

Example 1: The encoder side 100 may write the type information of the first type of filter into a bitstream, and send the bitstream to the decoder side 200.

Example 2: The encoder side 100 may send the type information of the first type of filter to the decoder side 200 as the rendering information. For example, the encoder side 100 compresses the rendering information including the type information of the first type of filter, and then sends the compressed rendering information to the decoder side 200.

In this embodiment, the encoder side determines the first type of filter from the plurality of specified types of filters, where the first type of filter matches a filter used in an image rendering process. This helps improve a similarity between the virtual reference frame determined by the encoder side by using the first type of filter and the second image by comparison with a problem that compression performance is low because a similarity between a reference frame and the second image is low when a fixed filter is used to process the reconstructed image to obtain the reference frame. Therefore, when the encoder side encodes the second image based on the virtual reference frame, a residual value corresponding to the second image is reduced, and an amount of data corresponding to the second image in a bitstream is reduced. This improves compression performance and video encoding efficiency.

Optionally, for the foregoing case in which the encoder side 100 determines one filter from the "Catmull-Rom filter/Bilinear filter" as the first type of filter, the following provides a possible implementation.

When the rendering parameter includes the depth map, the encoder side 100 determines the first type of filter from the "Catmull-Rom filter/Bilinear filter" based on a correspondence between edge information of an object in the depth map and a reference block in the first decoded image corresponding to the depth map.

For example, the encoder side 100 first performs sobel filtering on the depth map to obtain a filtering result. Then, the encoder side 100 performs an Otsu binarization on the filtering result, to obtain the edge information of the object in the depth map. Finally, the encoder side 100 determines, from the "Catmull-Rom filter/Bilinear filter" based on a correspondence between the edge information of the object and each reference block in the first decoded image or an image block that is in the depth map and that corresponds to the reference block, a first type of filter corresponding to each reference block. For example, when a position of a pixel in a reference block in the first decoded image is at a position indicated by the edge information, the Catmull-Rom filter is used as a first type of filter of the reference block. When a position of a pixel in a reference block in the first decoded image is not at the position indicated by the edge information, the bilinear filter is used as a first type of filter of the reference block.

Optionally, when the processing parameter with the highest priority in the determined rendering parameter is the albedo map, and the filter is the "Catmull-Rom filter/B-spline filter", a filter is determined from the "Catmull-Rom filter/B-spline filter" as the first type of filter. The following provides a possible example.

The encoder side 100 first performs sobel filtering on the albedo map to obtain a filtering result. Then, the encoder side 100 performs an Otsu binarization on the filtering result, to obtain edge information of an object in the albedo map. Finally, the encoder side 100 determines, from the "Catmull-Rom filter/B-spline filter" based on a correspondence between the edge information of the object and each reference block in the first decoded image or an image block that is in the depth map and that corresponds to the reference block, a first type of filter corresponding to each reference block. For example, when a position of a pixel in a reference block in the first decoded image is at a position indicated by the edge information, the Catmull-Rom filter is used as a first type of filter of the reference block. When a position of a pixel in a reference block in the first decoded image is not at the position indicated by the edge information, the β-spline filter is used as a first type of filter of the reference block.

The encoder side performs interpolation on different reference blocks by using different first types of filters based on different position relationships between the edge information of the object and the reference blocks, so that a similarity between a virtual reference block obtained by the encoder side through interpolation and a corresponding image block in the second image is improved. When the encoder side encodes the image block based on the virtual reference block, a residual value corresponding to the image block is reduced. This improves compression performance and video encoding efficiency.

For the foregoing case in which the encoder side 100 performs interpolation on the graphic motion vector map when the size of the graphic motion vector map is inconsistent with the size of the first decoded image, the following provides a possible implementation.

The encoder side 100 first generates a blank image whose size is consistent with a size of the source image or the graphic motion vector map. Then, the encoder side 100 determines a second correspondence between a position of a pixel in a first graphic motion vector map and a position of a pixel in the blank image based on a size ratio of the first graphic motion vector map to the blank image. Finally, the encoder side 100 performs interpolation on the graphic motion vector map or the first decoded image by using an interpolation filter, to determine a pixel value and an offset of each pixel in the blank image. When the size of the graphic motion vector map obtained through interpolation is consistent with the size of the first decoded image, a first correspondence indicated by the graphic motion vector map obtained through interpolation is obtained. For descriptions of the first correspondence, refer to the content in step 2 shown in FIG. 6. The size of the source image is consistent with the size of the first decoded image.

For example, FIG. 7 is a diagram of a graphic motion vector interpolation method according to this application. An example in which the first graphic motion vector map is an original graphic motion vector map output by the image rendering engine, and a size of the first graphic motion vector map is less than the size of the first decoded image is used for description.

The size of the first graphic motion vector map is 4x4, and the size of the first decoded image is 8x8. The encoder side 100 generates a blank image whose size is consistent with that of the first decoded image, for example, an 8x8 blank image. The encoder side 100 determines that a size ratio of the first graphic motion vector map to the blank image is 1:4, that is, one pixel in the first graphic motion vector map corresponds to four pixels in the blank image. As shown in FIG. 6, when coordinates of a pixel C in the first graphic motion vector map are (1, 1), and the pixel C has an offset (1, 1), four corresponding pixels in the blank image are C (1, 1), C₁ (1, 2), C₂ (2, 1), and C₃ (2, 2). The encoder side 100 performs interpolation on the first graphic motion vector map based on a second correspondence between a position of the pixel C in the first graphic motion vector map and positions of the pixels C, C₁, C₂, and C₃ in the blank image by using an interpolation filter, to obtain pixel values and offsets of the pixels C, C₁, C₂, and C₃ in a second graphic motion vector map. For example, all offsets of the pixels in the blank image are (2, 2). The encoder side 100 may obtain the first correspondence based on the offsets.

For the foregoing interpolation filter, this application provides several possible examples, for example, one of a bilinear filter, a nearest filter, and a bicubic filter.

When a graphic motion vector is inconsistent with the source image, the encoder side performs interpolation on the graphic motion vector map to obtain a graphic motion vector map obtained through interpolation. A size of the graphic motion vector map obtained through interpolation is consistent with the size of the first decoded image, and pixels of the graphic motion vector map obtained through interpolation match pixels of the first decoded image. The encoder side performs interpolation on the first decoded image based on the graphic motion vector map obtained through interpolation, to obtain a virtual reference frame. This improves a degree of matching between the virtual reference frame and the second image. When the encoder side encodes the second image based on the virtual reference frame, a residual value corresponding to the image is reduced, and compression performance is improved.

Optionally, when the first type of filter determined in step S520 is a filter whose filter kernel can be specified, the encoder side 100 further determines a size of the filter kernel used by the filter. The following provides a possible implementation.

The encoder side 100 first determines a target discrete parameter of a pixel in the first decoded image based on the graphic motion vector map indicated in the rendering information.

In a possible example, when a size of the graphic motion vector map in the rendering information is inconsistent with the size of the first decoded image, the encoder side 100 extracts, based on an indication that the first image and the second image have at least a partially overlapping area and that is indicated by the graphic motion vector map obtained through interpolation, an image block in the overlapping area in the first decoded image, calculates a discrete parameter of a pixel in the image block on each channel as the target discrete parameter.

In another possible example, when a size of the graphic motion vector map in the rendering information is consistent with the size of the first decoded image, the encoder side 100 calculates a discrete parameter of a pixel in a current reference block in the first decoded image on each channel as the target discrete parameter. The current reference block may indicate a reference block on which interpolation is being performed.

Each channel of the pixel includes three color channels: a luminance channel (Y), a blue concentration offset channel (Cb), and a red concentration offset channel (Cr). The target discrete parameter includes a target variance and a target covariance.

Second, the first type of filter on the encoder side 100 performs interpolation on the reference block by using a first filter kernel, and calculates a first discrete parameter of a pixel in a virtual reference block obtained through interpolation on each channel.

The first filter kernel is one of a plurality of specified filter kernels, and the plurality of filter kernels have different sizes.

For example, the first filter kernel is a 3x3 filter kernel, and a weight is specified for the 3x3 filter kernel. The first type of filter performs interpolation filtering on the reference block by using the 3x3 filter kernel, to obtain a pixel value of each pixel in the virtual reference block. The encoder side 100 calculates a first variance or a first covariance of the pixel in the virtual reference block on each channel based on the pixel value of each pixel in the virtual reference block, to obtain a first discrete parameter of the virtual reference block.

The weight in the filter kernel may be obtained based on a graphic motion vector map. For example, the graphic motion vector map indicates a position mapping relationship between a pixel in the first image and a pixel in the second image, and the mapping relationship is not necessarily an integer-pixel mapping relationship. After an object in the first image moves, the second image is obtained. A pixel located at a first position in the first image is offset to a second position in the second image, and the second position may be an integer-pixel position, or may be between positions of a plurality of pixels in the second image. If a distance value corresponding to the second position is 0.5, it indicates that the second position is located in a median of positions of two pixels in the second image. The encoder side 100 determines the weight in the filter kernel based on the pixel position mapping relationship.

Third, the encoder side 100 determines, from at least one first discrete parameter corresponding to all filter kernels, a first discrete parameter that has a smallest difference from the target discrete parameter, and uses a filter kernel corresponding to the first discrete parameter as a parameter of the first type of filter.

The encoder side 100 determines the first discrete parameter that has a smallest difference from the target discrete parameter, and the encoder side 100 uses the first filter kernel corresponding to the first discrete parameter as the parameter of the first type of filter. The encoder side performs interpolation on the first decoded image by using the first type of filter based on the parameter of the first type of filter, to obtain a virtual reference frame. A degree of matching between the virtual reference frame and the second image is improved. When the encoder side encodes the second image based on the virtual reference frame, a residual value corresponding to the second image is reduced, and an amount of data of the image in the bitstream is reduced. This improves compression performance.

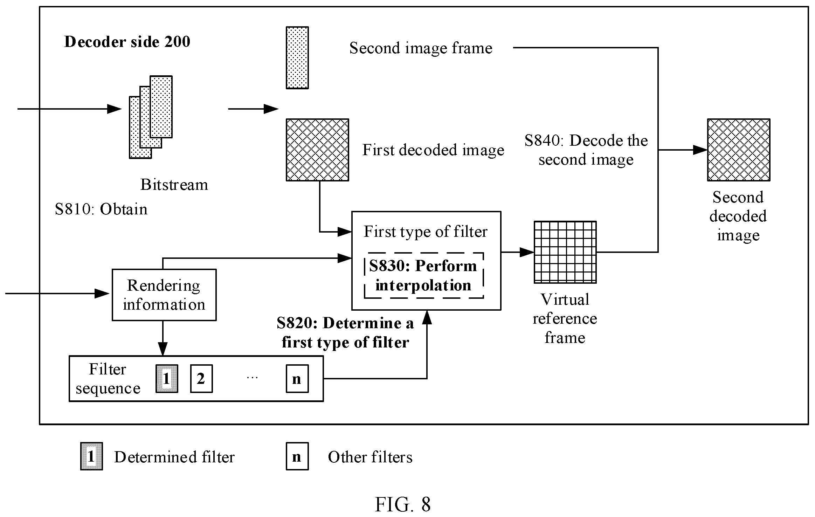

After the encoder side 100 encodes a source video or encodes one or more source images in the source video according to the foregoing video encoding method, the encoder side 100 obtains a bitstream corresponding to the source video or the source images. The encoder side 100 sends the bitstream to the decoder side 200, and the decoder side 200 decodes the bitstream for playing. FIG. 8 is a schematic flowchart of a video decoding method according to this application. The video decoding method may be applied to the video encoding and decoding system shown in FIG. 1 or the video decoder shown in FIG. 3. For example, the video decoding method may be performed by the decoder side 200 or the video decoder 220. Herein, an example in which the decoder side 200 performs the image decoding method provided in this embodiment is used for description. As shown in FIG. 8, the image encoding method provided in this embodiment includes the following step S810 to step S840.

S810: The decoder side 200 obtains a bitstream and rendering information corresponding to the bitstream.

The rendering information indicates a processing parameter used in a process in which the decoder side 200 generates the bitstream based on a plurality of source images. For content of the processing parameter, refer to the descriptions of the processing parameter in S510 shown in FIG. 5. Details are not described herein again. A graphic motion vector map in the processing parameter indicates that a source image corresponding to a first image frame and a source image corresponding to a second image frame in a plurality of image frames have at least a partially overlapping area.

For example, the rendering information may be sent by the encoder side 100 to the decoder side 200.

In a possible example, the rendering information obtained by the decoder side 200 includes one or a combination of the processing parameters in the mapping table shown in Table 1.

S820: The decoder side 200 determines a first type of filter based on the rendering information.

The first type of filter is one of a plurality of specified types of filters.

For example, the decoder side 200 queries, based on the processing parameter indicated by the rendering information, Table 1 to obtain a first type of filter corresponding to the processing parameter. Table 1 shows at least one type of filter in a plurality of types of filters corresponding to the processing parameters, and each type of filter has a corresponding priority.

For content of determining the first type of filter by the decoder side 200 based on the rendering information, refer to the example in which the encoder side 100 determines the first type of filter based on the processing parameter included in the rendering information. Details are not described herein again.

In a possible case, the decoder side 200 may query a preset mapping table based on the rendering information, to obtain a filter corresponding to each processing parameter in the rendering information. The decoder side 200 determines the first type of filter from all filters corresponding to the rendering information.

For related content of the mapping table, refer to S520 in FIG. 5 and the descriptions of determining the first type of filter shown in Table 1. Details are not described herein again.

In a possible case, the decoder side 200 obtains filter information. The filter determines, based on a filter type and a parameter that are indicated in the filter information, the first type of filter and a filtering parameter corresponding to the first type of filter.

The filtering parameter indicates a processing parameter, for example, a size of a filter kernel of the filter and a corresponding weight, used in a process in which the decoder side 200 obtains a virtual reference frame by using the first type of filter.

For example, the rendering information or the bitstream may include the filter information.

In a possible example, when a TAA algorithm of an image rendering engine on the encoder side 100 is determined, the first type of filter is preset on the decoder side 200.

S830: The decoder side 200 performs interpolation on a first decoded image corresponding to the first image frame by using the first type of filter, to obtain a virtual reference frame of the second image frame.

For example, the decoder side 200 first generates a blank image whose size is consistent with a size of a reference block. Then, the decoder side 200 performs interpolation on the reference block based on a first correspondence and a split graphic motion vector map, to determine pixel values of all pixels in the blank image. Finally, the decoder side 200 obtains the virtual reference frame based on the pixel values of all the pixels in the blank image. The first correspondence is determined based on the graphic motion vector map in the rendering information. The reference block is the first decoded image, and the first decoded image is any one of a plurality of reference blocks corresponding to a first image.

For detailed descriptions of the foregoing example, refer to the content shown in FIG. 6. Details are not described herein again.

The encoder side performs interpolation on the reference block in the first decoded image based on the first correspondence, to obtain the virtual reference frame of the second image. A similarity between the virtual reference frame and the second image frame is higher than a similarity between the first decoded image and the second image frame. When the decoder side 200 decodes the second image frame based on the virtual reference frame, an amount of processed data is reduced, and decoding efficiency is improved.

S840: The decoder side 200 decodes the second image frame based on the virtual reference frame, to obtain a second decoded image corresponding to the second image frame.

The decoder side 200 performs processing such as inverse quantization and inverse transformation on the second image frame, to obtain a residual block corresponding to the second image frame, a motion vector, and the like. The decoder side 200 performs image reconstruction based on data such as the residual block and the motion vector and the virtual reference frame determined in S830, to obtain the second decoded image corresponding to the second image frame.

For example, the decoder side 200 processes the second image frame in the bitstream by using the entropy decoder 221, the inverse quantizer 222, and the inverse transformer 223 in the video decoder 220 shown in FIG. 3, to obtain a residual block between the second image frame and a corresponding virtual reference frame. The video decoder 220 performs image block reconstruction based on the residual block, the motion vector, and the virtual reference frame. The video decoder 220 processes a plurality of reconstructed image blocks by using the filter unit 224, to obtain the second decoded image corresponding to the second image frame.

The decoder side 200 selects the first type of filter from the plurality of specified types of filters based on the processing parameter indicated by the rendering information, and obtains the virtual reference frame of the second image frame by using the first type of filter, to avoid a problem that decoding effect is poor because a reference frame is obtained by processing the first decoded image by using a fixed filter. A degree of matching between the virtual reference frame and a source image corresponding to the second image frame is improved. When the decoder side 200 decodes the second image frame based on the virtual reference frame, and a processing capability of the decoder side is consistent, an amount of data processed by the decoder side is reduced, and decoding efficiency is improved.

When a size of the graphic motion vector map obtained by the decoder side 200 is inconsistent with a size of the first decoded image, the decoder side 200 performs interpolation on the graphic motion vector map. For example, the decoder side 200 first generates a blank image whose size is consistent with the size of the first decoded image. Then, the decoder side 200 determines a second correspondence between a position of a pixel in a first graphic motion vector map and a position of a pixel in the blank image based on a size ratio of the first graphic motion vector map to the blank image. Finally, the decoder side 200 performs interpolation on the graphic motion vector map by using an interpolation filter, to determine a pixel value and an offset of each pixel in the blank image.

The size of the first decoded image is consistent with a size of the source image.

For detailed descriptions of the foregoing example, refer to the content shown in FIG. 7. Details are not described herein again.

When the graphic motion vector is inconsistent with the first decoded image, the decoder side performs interpolation on the graphic motion vector map to obtain a graphic motion vector map obtained through interpolation. A size of the graphic motion vector map obtained through interpolation is consistent with the size of the first decoded image, and the graphic motion vector map obtained through interpolation matches the first decoded image. The decoder side performs interpolation on the first decoded image based on the graphic motion vector map obtained through interpolation, to obtain a virtual reference frame. This improves a degree of matching between the virtual reference frame and the second image frame. When the decoder side 200 decodes the second image frame based on the virtual reference frame, an amount of processed data is reduced. This improves decoding efficiency.

Optionally, when the first type of filter determined in step S820 is a filter whose filter kernel can be specified, the decoder side 200 further determines a size of the filter kernel used by the filter. The following provides a possible implementation.

The decoder side 200 first determines a target discrete parameter of a pixel in the first decoded image based on the graphic motion vector map indicated in the rendering information.

Second, the first type of filter on the decoder side 200 performs interpolation on the reference block by using a first filter kernel, and calculates a first discrete parameter of a pixel in a virtual reference block obtained through interpolation on each channel.

Third, the decoder side 200 determines, from at least one first discrete parameter corresponding to all filter kernels, a first discrete parameter that has a smallest difference from the target discrete parameter, and the decoder side 200 uses a filter kernel corresponding to the first discrete parameter as a parameter of the first type of filter.

For a process in which the decoder side 200 determines the filter kernel, refer to the content in which the encoder side 100 determines the size of the filter kernel. Details are not described herein again.

The decoder side 200 determines the first discrete parameter that has a smallest difference from the target discrete parameter, and the decoder side 200 uses the first filter kernel corresponding to the first discrete parameter as the parameter of the first type of filter. The decoder side 200 performs interpolation on the first decoded image by using the first type of filter based on the parameter of the first type of filter, to obtain a virtual reference frame. A degree of matching between the virtual reference frame and the second image frame is improved. When the decoder side 200 decodes the second image frame based on the virtual reference frame, an amount of processed data is reduced. This improves decoding efficiency.

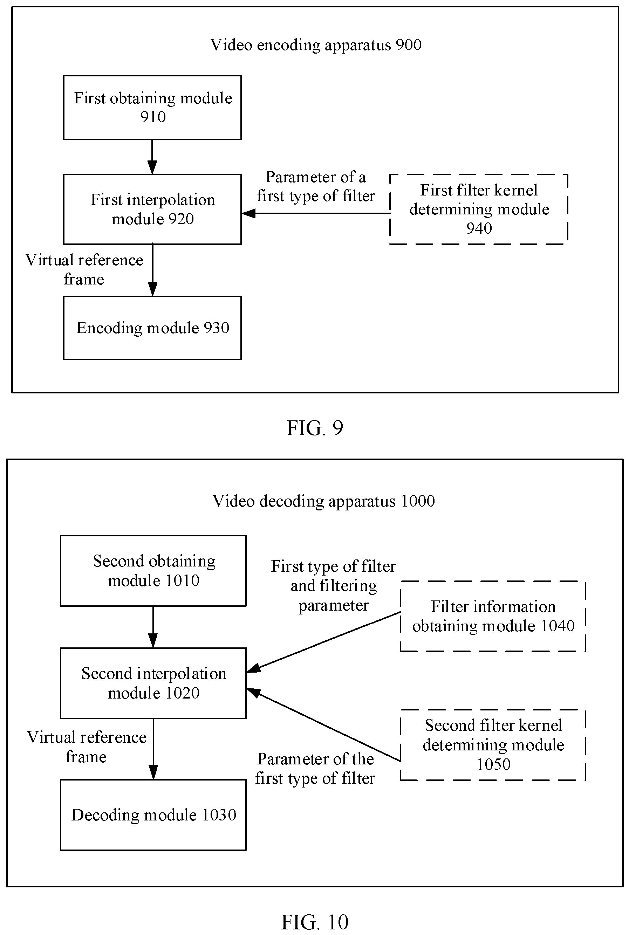

The foregoing describes in detail the video encoding method provided in this application with reference to FIG. 4 to FIG. 7. The following describes a video encoding apparatus provided in this application with reference to FIG. 9. FIG. 9 is a diagram of a structure of a video encoding apparatus according to this application. The video encoding apparatus 900 may be configured to implement functions of the encoder side in the foregoing method embodiments, and therefore can also implement beneficial effect of the foregoing method embodiments.

As shown in FIG. 9, the video encoding apparatus 900 includes a first obtaining module 910, a first interpolation module 920, and an encoding module 930. The video encoding apparatus 900 is configured to implement functions of the encoder side in the method embodiments corresponding to FIG. 4 to FIG. 7. In a possible example, a specific process in which the video encoding apparatus 900 is configured to implement the foregoing video encoding method includes the following process.

The first obtaining module 910 is configured to obtain a source video and rendering information corresponding to the source video. The source video includes a plurality of source images. The rendering information indicates a processing parameter used in a process of generating a bitstream based on the plurality of source images, and the processing parameter indicates that a first image and a second image in the plurality of source images have at least a partially overlapping area.

The first interpolation module 920 is configured to: determine a first type of filter based on the rendering information, and perform interpolation on a first decoded image by using the first type of filter, to obtain a virtual reference frame of the second image. The first type of filter is one of a plurality of specified types of filters, the first decoded image is a reconstructed image obtained by encoding and then decoding the first image in the plurality of images, and the first image is encoded before the second image.

The encoding module 930 is configured to encode second image information based on the virtual reference frame of the second image.

To further implement functions in the method embodiments shown in FIG. 4 to FIG. 7, this application further provides a video encoding apparatus. The video encoding apparatus 900 further includes a first filter kernel determining module 940.

The first filter kernel determining module 940 is configured to: determine a target discrete parameter of a pixel in the first decoded image based on the rendering information, where the target discrete parameter includes a target variance or a target covariance; and use, as a parameter of the first type of filter, a first filter kernel corresponding to a first discrete parameter that has a smallest difference from the target discrete parameter, where the first discrete parameter indicates a discrete parameter that is obtained by the first type of filter by performing interpolation on the pixel based on the first filter kernel and performing calculation based on a pixel obtained through interpolation, the first filter kernel is one of a plurality of specified filter kernels, and the first discrete parameter includes a first variance or a first covariance.

It should be understood that the encoder side in the foregoing embodiments may correspond to the video encoding apparatus 900, and may correspond to a corresponding body for performing the methods in FIG. 4 to FIG. 7 according to embodiments of this application. In addition, operations and/or functions of the modules in the video encoding apparatus 900 are separately used to implement corresponding procedures of the methods in the corresponding embodiments in FIG. 4 to FIG. 7. For brevity, details are not described herein again.

The foregoing describes in detail the video decoding method provided in this application with reference to FIG. 3 and FIG. 8. The following describes a video decoding apparatus provided in this application with reference to FIG. 10. FIG. 10 is a diagram of a structure of a video decoding apparatus according to this application. The video decoding apparatus 1000 may be configured to implement functions of the decoder side in the foregoing method embodiments, and therefore can also implement beneficial effect of the foregoing method embodiments.

As shown in FIG. 10, the video decoding apparatus 1000 includes a second obtaining module 1010, a second interpolation module 1020, and a decoding module 1030. The video decoding apparatus 1000 is configured to implement functions of the decoder side in the method embodiments corresponding to FIG. 3 and FIG. 8. In a possible example, a specific process in which the video decoding apparatus 1000 is configured to implement the foregoing video decoding method includes the following process.

The second obtaining module 1010 is configured to obtain a bitstream and rendering information corresponding to the bitstream. The bitstream includes a plurality of image frames. The rendering information indicates a processing parameter used in a process of generating the bitstream based on a plurality of source images, and the processing parameter indicates that a source image corresponding to a first image frame and a source image corresponding to a second image frame in the plurality of image frames have at least a partially overlapping area.

The second interpolation module 1020 is configured to: determine a first type of filter based on the rendering information, and perform interpolation on a first decoded image corresponding to the first image frame by using the first type of filter, to obtain a virtual reference frame of the second image frame. The first type of filter is one of a plurality of specified types of filters.

The decoding module 1030 is configured to decode the second image frame based on the virtual reference frame, to obtain a second decoded image corresponding to the second image frame.

To further implement functions in the method embodiments shown in FIG. 3 and FIG. 8, this application further provides a video decoding apparatus. The video decoding apparatus 1000 further includes a filter information obtaining module 1040 and a second filter kernel determining module 1050.

The filter information obtaining module 1040 is configured to: obtain filter information; and determine, based on a filter type and a parameter that are indicated in the filter information, the first type of filter and a filtering parameter corresponding to the first type of filter, where the filtering parameter indicates a processing parameter used in a process of obtaining the virtual reference frame by using the first type of filter.

The second filter kernel determining module 1050 is configured to: determine a target discrete parameter of a pixel in the first decoded image based on the rendering information, where the target discrete parameter includes a target variance or a target covariance; and use, as a parameter of the first type of filter, a first filter kernel corresponding to a first discrete parameter that has a smallest difference from the target discrete parameter, where the first discrete parameter indicates a discrete parameter that is obtained by the first type of filter by performing interpolation on the pixel based on the first filter kernel and performing calculation based on a pixel obtained through interpolation, the first filter kernel is one of a plurality of specified filter kernels, and the first discrete parameter includes a first variance or a first covariance.

It should be understood that the decoder side according to embodiments of this application may correspond to the video decoding apparatus 1000 in embodiments of this application, and may correspond to a corresponding body for performing the methods according to embodiments of this application in FIG. 3 and FIG. 8. In addition, operations and/or functions of the modules in the video decoding apparatus 1000 are separately used to implement corresponding procedures of the methods in the corresponding embodiments in FIG. 3 and FIG. 8. For brevity, details are not described herein again.

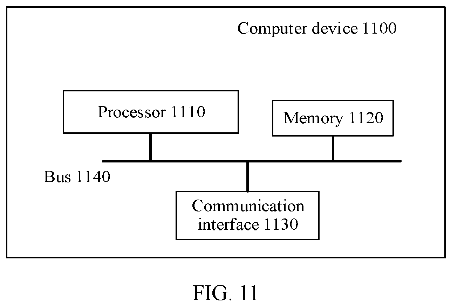

An embodiment of this application provides a computer device. FIG. 11 is a diagram of a structure of a computer device according to this application. The computer device may be used in the encoding and decoding system shown in FIG. 1, and the computer device may be either the encoder side 100 or the decoder side 200.

The computer device 1100 may be specifically a computing device having a computing capability, for example, a mobile phone, a tablet computer, a television (which may also be referred to as a smart television, a smart screen, or a large-screen device), a notebook computer, an ultra-mobile personal computer (ultra-mobile personal computer, UMPC), a handheld computer, a netbook, a personal digital assistant (Personal Digital Assistant, PDA), a wearable electronic device (for example, a smartwatch, a smart band, or smart glasses), a vehicle-mounted device, a virtual reality device, or a server.

As shown in FIG. 11, the processing device 1100 may include a processor 1110, a memory 1120, a communication interface 1130, a bus 1140, and the like. The processor 1110, the memory 1120, and the communication interface 1130 are connected through the bus 1140.

It may be understood that the structure shown in embodiments of the present invention does not constitute a specific limitation on the processing device. In some other embodiments of this application, the processing device may include more or fewer components than those shown in the figure, or some components may be combined, or some components may be divided, or different component arrangements may be used. The components shown in the figure may be implemented by hardware, software, or a combination of software and hardware.

The processor 1110 may include one or more processing units. For example, the processor 1110 may include an application processor (application processor, AP), a modem processor, a central processing unit (central processing unit, CPU), a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

An internal memory may be further disposed in the processor 1110, and is configured to store instructions and data. In some embodiments, the internal memory in the processor 1110 is a cache memory. The internal memory may store instructions or data just used or cyclically used by the processor 1110. If the processor 1110 needs to use the instructions or the data again, the processor may directly invoke the instructions or the data from the internal memory. This avoids repeated access, reduces waiting time of the processor 1110, and improves system efficiency.

The memory 1120 may be configured to store computer-executable program code. The executable program code includes instructions. The processor 1110 runs the instructions stored in the internal memory 1120, to perform various function applications of the processing device 1100 and data processing. The internal memory 1120 may include a program storage area and a data storage area. The program storage area may store an operating system, an application required by at least one function (for example, a coding function or a sending function), and the like. The data storage area may store data (such as a bitstream and a reference frame) created in a process of using the processing device 1100, and the like. In addition, the internal memory 1120 may include a high-speed random access memory, or may include a non-volatile memory, for example, at least one magnetic disk storage device, a flash memory device, or a universal flash storage (universal flash storage, UFS).

The communication interface 1130 is configured to implement communication between the processing device 1100 and an external device or component. In this embodiment, the communication interface 1130 is configured to exchange data with another processing device.

The bus 1140 may include a path, configured to transmit information between the foregoing components (for example, the processor 1110, the memory 1120, and the communication interface 1130). In addition to a data bus, the bus 1140 may further include a power bus, a control bus, a state signal bus, and the like. However, for clarity of description, various buses are marked as the bus 1140 in the figure. The bus 1140 may be a peripheral component interconnect express (peripheral component interconnect express, PCIe) high-speed bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like.

It should be noted that in FIG. 11, that the processing device 1100 includes only one processor 1110 and one memory 1120 is used as an example. Herein, the processor 1110 and the memory 1120 each indicate a type of component or device. In a specific embodiment, a quantity of components or devices of each type may be determined based on service requirements.

When the video encoding (or video decoding) apparatus is implemented by hardware, the hardware may be implemented by using a processor or a chip. The following uses an example in which the hardware is a chip for description. The chip includes a processor, configured to implement functions of the encoder side and/or the decoder side in the foregoing methods. In a possible design, the chip further includes a power supply circuit, configured to supply power to the processor. The chip may directly include a chip, or may include a chip and another discrete component.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device like a server or a data center, integrating one or more usable media. The usable medium may be a magnetic medium like a floppy disk, a hard disk, or a magnetic tape, may be an optical medium like a digital video disc (digital video disc, DVD), or may be a semiconductor medium like a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A video decoding method, wherein the method is performed by a decoder side, and the method comprises:
obtaining a bitstream and rendering information corresponding to the bitstream, wherein the bitstream comprises a plurality of image frames, the rendering information indicates a processing parameter used in a process of generating the bitstream based on a plurality of source images, and the processing parameter indicates that a source image corresponding to a first image frame and a source image corresponding to a second image frame in the plurality of image frames have at least a partially overlapping area;
performing, by using a first type of filter determined based on the rendering information, interpolation on a first decoded image corresponding to the first image frame, to obtain a virtual reference frame of the second image frame, wherein the first type of filter is one of a plurality of specified types of filters; and
decoding the second image frame based on the virtual reference frame, to obtain a second decoded image corresponding to the second image frame.

2. The method according to claim 1, wherein the first type of filter determined based on the rendering information comprises:
querying a specified mapping table based on the rendering information, to obtain a filter corresponding to each processing parameter in the rendering information, wherein the mapping table indicates at least one type of filter that is in the plurality of types of filters and that corresponds to each processing parameter; and
determining the first type of filter from all filters corresponding to the rendering information.

3. The method according to claim 2, wherein the mapping table further indicates a priority of each type of filter in the plurality of types of filters; and
the determining the first type of filter from all filters corresponding to the rendering information comprises:
obtaining priorities of all the filters corresponding to the rendering information; and
using a filter with a highest filter priority in all the filters as the first type of filter.

4. The method according to any one of claims 1 to 3, wherein the rendering information comprises one or a combination of a depth map, an albedo map, and a post-processing parameter.

5. The method according to claim 4, wherein if the rendering information comprises the depth map, the first type of filter is determined based on a relationship between a pixel in the depth map and edge information of an object in the depth map; or
if the rendering information comprises the albedo map, the first type of filter is determined based on a relationship between a pixel in the albedo map and edge information of an object in the albedo map; or
if the post-processing parameter comprised in the rendering information comprises an anti-aliasing parameter, the first type of filter is a filter indicated by the anti-aliasing parameter; or
if the post-processing parameter comprised in the rendering information comprises an instruction for execution of a motion blur module, the first type of filter is a bilinear filter; or
the first type of filter is a Catmull-Rom filter.

6. The method according to any one of claims 1 to 5, wherein before the performing, by using a first type of filter determined based on the rendering information, interpolation on a first decoded image corresponding to the first image frame, the method further comprises:
obtaining filter information; and
determining, based on a filter type and a parameter that are indicated in the filter information, the first type of filter and a filtering parameter corresponding to the first type of filter, wherein the filtering parameter indicates a processing parameter used in a process of obtaining the virtual reference frame by using the first type of filter.

7. The method according to any one of claims 1 to 6, wherein the performing, by using a first type of filter determined based on the rendering information, interpolation on a first decoded image corresponding to the first image frame, to obtain a virtual reference frame of the second image frame comprises:
performing interpolation on the first decoded image based on a first correspondence, to obtain pixel values of all pixels in the virtual reference frame, wherein the first correspondence indicates a position mapping relationship between a pixel in the source image corresponding to the first image frame and a pixel in the source image corresponding to the second image frame in the overlapping area between the source image corresponding to the first image frame and the source image corresponding to the second image frame; and
obtaining the virtual reference frame based on the pixel values of all the pixels.

8. The method according to claim 7, wherein the first correspondence is obtained by using the following method:
when a size of a graphic motion vector map in the rendering information does not match a size of the source image, creating a blank image whose size matches the size of the source image;
determining a second correspondence between pixel coordinates in the graphic motion vector map and pixel coordinates in the blank image; and
performing interpolation on the graphic motion vector map based on the second correspondence by using a specified filter, to obtain the first correspondence.

9. The method according to claim 7 or 8, wherein the method further comprises:
determining a target discrete parameter of a pixel in the first decoded image based on the rendering information, wherein the target discrete parameter comprises a target variance or a target covariance; and
using, as a parameter of the first type of filter, a first filter kernel corresponding to a first discrete parameter that has a smallest difference from the target discrete parameter, wherein the first discrete parameter indicates a discrete parameter that is obtained by the first type of filter by performing interpolation on the pixel based on the first filter kernel and performing calculation based on a pixel obtained through interpolation, the first filter kernel is one of a plurality of specified filter kernels, and the first discrete parameter comprises a first variance or a first covariance.

10. A video encoding method, wherein the method is performed by an encoder side, and the method comprises:
obtaining a plurality of source images and rendering information corresponding to the plurality of source images, wherein the rendering information indicates a processing parameter used in a process of generating a bitstream based on the plurality of source images, and the processing parameter indicates that a first image and a second image in the plurality of source images have at least a partially overlapping area;
performing interpolation on a first decoded image by using a first type of filter determined based on the rendering information, to obtain a virtual reference frame of the second image, wherein the first type of filter is one of a plurality of specified types of filters, and the first decoded image is a reconstructed image obtained by encoding and then decoding the first image in the plurality of images; and
encoding the second image based on the virtual reference frame, to obtain a bitstream corresponding to the second image.

11. The method according to claim 10, wherein the first type of filter determined based on the rendering information comprises:
querying a specified mapping table based on the rendering information, to obtain a filter corresponding to each processing parameter in the rendering information, wherein the mapping table indicates at least one type of filter that is in the plurality of types of filters and that corresponds to each processing parameter; and
determining the first type of filter from all filters corresponding to the rendering information.

12. The method according to claim 11, wherein the mapping table further indicates a priority of each type of filter in the plurality of types of filters; and
the determining the first type of filter from all filters corresponding to the rendering information comprises:
obtaining priorities of all the filters corresponding to the rendering information; and
using a filter with a highest filter priority in all the filters as the first type of filter.

13. The method according to claim 11, wherein the determining the first type of filter from all filters corresponding to the rendering information comprises:
performing prediction on all the filters corresponding to the rendering information, to obtain at least one prediction result, wherein one prediction result corresponds to one of all the filters, and the prediction result indicates encoding information obtained by precoding the second image by using the filter, and the encoding information comprises at least one of a prediction bit rate and a distortion rate of the second image; and
selecting, from the at least one prediction result, a target prediction result in which encoding information meets a specified condition, and using a filter corresponding to the target prediction result as the first type of filter.

14. The method according to any one of claims 10 to 13, wherein the rendering information comprises one or a combination of a depth map, an albedo map, and a post-processing parameter.

15. The method according to claim 14, wherein if the rendering information comprises the depth map, the first type of filter is determined based on a relationship between a pixel in the depth map and edge information of an object in the depth map; or
if the rendering information comprises the albedo map, the first type of filter is determined based on a relationship between a pixel in the albedo map and edge information of an object in the albedo map; or
if the post-processing parameter comprised in the rendering information comprises an anti-aliasing parameter, the first type of filter is a filter indicated by the anti-aliasing parameter; or
if the post-processing parameter comprised in the rendering information comprises an instruction for execution of a motion blur module, the first type of filter is a bilinear filter; or
the first type of filter is a Catmull-Rom filter.

16. The method according to any one of claims 10 to 15, wherein the performing interpolation on a first decoded image by using a first type of filter determined based on the rendering information, to obtain a virtual reference frame of the second image comprises:
performing interpolation on the first decoded image based on a first correspondence, to obtain pixel values of all pixels in the virtual reference frame, wherein the first correspondence indicates a position mapping relationship between a pixel in the first image and a pixel in the second image in the overlapping area between the first image and the second image; and
obtaining the virtual reference frame based on the pixel values of all the pixels.

17. The method according to claim 16, wherein the first correspondence is obtained by using the following method:
when a size of a graphic motion vector map in the rendering information does not match a size of the source image, creating a blank image whose size matches the size of the source image;
determining a second correspondence between pixel coordinates in the graphic motion vector map and pixel coordinates in the blank image; and
performing interpolation on the graphic motion vector map based on the second correspondence by using a specified filter, to obtain the first correspondence.

18. The method according to claim 16 or 17, wherein the method further comprises:
determining a target discrete parameter of a pixel in the first decoded image based on the rendering information, wherein the target discrete parameter comprises a target variance or a target covariance; and
using, as a parameter of the first type of filter, a first filter kernel corresponding to a first discrete parameter that has a smallest difference from the target discrete parameter, wherein the first discrete parameter indicates a discrete parameter that is obtained by the first type of filter by performing interpolation on the pixel based on the first filter kernel and performing calculation based on a pixel obtained through interpolation, the first filter kernel is one of a plurality of specified filter kernels, and the first discrete parameter comprises a first variance or a first covariance.

19. The method according to any one of claims 10 to 18, wherein the method further comprises:
writing type information of the first type of filter into the bitstream.

20. A video decoding apparatus, wherein the apparatus comprises:
a second obtaining module, configured to obtain a bitstream and rendering information corresponding to the bitstream, wherein the bitstream comprises a plurality of image frames, the rendering information indicates a processing parameter used in a process of generating the bitstream based on a plurality of source images, and the processing parameter indicates that a source image corresponding to a first image frame and a source image corresponding to a second image frame in the plurality of image frames have at least a partially overlapping area;
a second interpolation module, configured to perform, by using a first type of filter determined based on the rendering information, interpolation on a first decoded image corresponding to the first image frame, to obtain a virtual reference frame of the second image frame, wherein the first type of filter is one of a plurality of specified types of filters; and
a decoding module, configured to decode the second image frame based on the virtual reference frame, to obtain a second decoded image corresponding to the second image frame.

21. The apparatus according to claim 20, wherein the second interpolation module is further configured to query a specified mapping table based on the rendering information, to obtain a filter corresponding to each processing parameter in the rendering information, wherein the mapping table indicates at least one type of filter that is in the plurality of types of filters and that corresponds to each processing parameter; and determine the first type of filter from all filters corresponding to the rendering information.

22. The apparatus according to claim 21, wherein the mapping table further indicates a priority of each type of filter in the plurality of types of filters; and
the second interpolation module is further configured to: obtain priorities of all the filters corresponding to the rendering information; and use a filter with a highest filter priority in all the filters as the first type of filter.

23. The apparatus according to any one of claims 20 to 22, wherein the rendering information comprises one or a combination of a depth map, an albedo map, and a post-processing parameter.

24. The apparatus according to claim 23, wherein if the rendering information comprises the depth map, the first type of filter is determined based on a relationship between a pixel in the depth map and edge information of an object in the depth map; or
if the rendering information comprises the albedo map, the first type of filter is determined based on a relationship between a pixel in the albedo map and edge information of an object in the albedo map; or
if the post-processing parameter comprised in the rendering information comprises an anti-aliasing parameter, the first type of filter is a filter indicated by the anti-aliasing parameter; or
if the post-processing parameter comprised in the rendering information comprises an instruction for execution of a motion blur module, the first type of filter is a bilinear filter; or
the first type of filter is a Catmull-Rom filter.

25. The apparatus according to any one of claims 20 to 24, wherein the apparatus further comprises:
a filter information obtaining module, configured to: obtain filter information; and determine, based on a filter type and a parameter that are indicated in the filter information, the first type of filter and a filtering parameter corresponding to the first type of filter, wherein the filtering parameter indicates a processing parameter used in a process of obtaining the virtual reference frame by using the first type of filter.

26. The apparatus according to any one of claims 20 to 25, wherein the second interpolation module is further configured to: perform interpolation on the first decoded image based on a first correspondence, to obtain pixel values of all pixels in the virtual reference frame, wherein the first correspondence indicates a position mapping relationship between a pixel in the source image corresponding to the first image frame and a pixel in the source image corresponding to the second image frame in the overlapping area between the source image corresponding to the first image frame and the source image corresponding to the second image frame; and obtain the virtual reference frame based on the pixel values of all the pixels.

27. The apparatus according to claim 26, wherein the correspondence is obtained by using the following method:
when a size of a graphic motion vector map in the rendering information does not match a size of the source image, creating a blank image whose size matches the size of the source image;
determining a second correspondence between pixel coordinates in the graphic motion vector map and pixel coordinates in the blank image; and
performing interpolation on the graphic motion vector map based on the second correspondence by using a specified filter, to obtain the first correspondence.

28. The apparatus according to claim 26 or 27, wherein the apparatus further comprises:
a second filter kernel determining module, configured to: determine a target discrete parameter of a pixel in the first decoded image based on the rendering information, wherein the target discrete parameter comprises a target variance or a target covariance; and use, as a parameter of the first type of filter, a first filter kernel corresponding to a first discrete parameter that has a smallest difference from the target discrete parameter, wherein the first discrete parameter indicates a discrete parameter that is obtained by the first type of filter by performing interpolation on the pixel based on the first filter kernel and performing calculation based on a pixel obtained through interpolation, the first filter kernel is one of a plurality of specified filter kernels, and the first discrete parameter comprises a first variance or a first covariance.

29. A video encoding apparatus, wherein the apparatus comprises:
a first obtaining module, configured to obtain a plurality of source images and rendering information corresponding to the plurality of source images, wherein the rendering information indicates a processing parameter used in a process of generating a bitstream based on the plurality of source images, and the processing parameter indicates that a first image and a second image in the plurality of source images have at least a partially overlapping area;
a first interpolation module, configured to perform interpolation on a first decoded image by using a first type of filter determined based on the rendering information, to obtain a virtual reference frame of the second image, wherein the first type of filter is one of a plurality of specified types of filters, and the first decoded image is a reconstructed image obtained by encoding and then decoding the first image in the plurality of images; and
an encoding module, configured to encode the second image based on the virtual reference frame.

30. The apparatus according to claim 29, wherein the first interpolation module is further configured to query a specified mapping table based on the rendering information, to obtain a filter corresponding to each processing parameter in the rendering information, wherein the mapping table indicates at least one type of filter that is in the plurality of types of filters and that corresponds to each processing parameter; and determine the first type of filter from all filters corresponding to the rendering information.

31. The apparatus according to claim 30, wherein the mapping table further indicates a priority of each type of filter in the plurality of types of filters; and
the first interpolation module is further configured to: obtain priorities of all the filters corresponding to the rendering information; and use a filter with a highest filter priority in all the filters as the first type of filter.

32. The apparatus according to claim 30, wherein the first interpolation module is further configured to: perform prediction on all the filters corresponding to the rendering information, to obtain at least one prediction result, wherein one prediction result corresponds to one of all the filters, and the prediction result indicates encoding information obtained by precoding the second image by using the filter, and the encoding information comprises at least one of a prediction bit rate and a distortion rate of the second image; and select, from the at least one prediction result, a target prediction result in which encoding information meets a specified condition, and use a filter corresponding to the target prediction result as the first type of filter.

33. The apparatus according to any one of claims 29 to 32, wherein the rendering information comprises one or a combination of a depth map, an albedo map, and a post-processing parameter.

34. The apparatus according to claim 33, wherein if the rendering information comprises the depth map, the first type of filter is determined based on a relationship between a pixel in the depth map and edge information of an object in the depth map; or
if the rendering information comprises the albedo map, the first type of filter is determined based on a relationship between a pixel in the albedo map and edge information of an object in the albedo map; or
if the post-processing parameter comprised in the rendering information comprises an anti-aliasing parameter, the first type of filter is a filter indicated by the anti-aliasing parameter; or
if the post-processing parameter comprised in the rendering information comprises an instruction for execution of a motion blur module, the first type of filter is a bilinear filter; or
the first type of filter is a Catmull-Rom filter.

35. The apparatus according to any one of claims 29 to 34, wherein the first interpolation module is further configured to: perform interpolation on the first decoded image based on a first correspondence, to obtain pixel values of all pixels in the virtual reference frame, wherein the first correspondence indicates a position mapping relationship between a pixel in the first image and a pixel in the second image in the overlapping area between the first image and the second image;
and obtain the virtual reference frame based on the pixel values of all the pixels.

36. The apparatus according to claim 35, wherein the first correspondence is obtained by using the following method:
when a size of a graphic motion vector map in the rendering information does not match a size of the source image, creating a blank image whose size matches the size of the source image;
determining a second correspondence between pixel coordinates in the graphic motion vector map and pixel coordinates in the blank image; and
performing interpolation on the graphic motion vector map based on the second correspondence by using a specified filter, to obtain the first correspondence.

37. The apparatus according to claim 35 or 36, wherein the apparatus further comprises:
a first filter kernel determining module, configured to: determine a target discrete parameter of a pixel in the first decoded image based on the rendering information, wherein the target discrete parameter comprises a target variance or a target covariance; and use, as a parameter of the first type of filter, a first filter kernel corresponding to a first discrete parameter that has a smallest difference from the target discrete parameter, wherein the first discrete parameter indicates a discrete parameter that is obtained by the first type of filter by performing interpolation on the pixel based on the first filter kernel and performing calculation based on a pixel obtained through interpolation, the first filter kernel is one of a plurality of specified filter kernels, and the first discrete parameter comprises a first variance or a first covariance.

38. The apparatus according to any one of claims 29 to 37, wherein the encoding module is further configured to write type information of the first type of filter into the bitstream.

39. A chip, comprising a processor and a power supply circuit, wherein
the power supply circuit is configured to supply power to the processor; and
the processor is configured to perform the method according to any one of claims 1 to 9; and/or the processor is configured to perform the method according to any one of claims 10 to 19.

40. A codec, comprising a memory and a processor, wherein the memory is configured to store computer instructions, and when executing the computer instructions, the processor implements the method according to any one of claims 1 to 9; and/or when executing the computer instructions, the processor implements the method according to any one of claims 10 to 19.

41. An encoding and decoding system, comprising an encoder side and a decoder side, wherein
the encoder side is configured to encode a plurality of images based on rendering information corresponding to the plurality of source images, to obtain a bitstream corresponding to the plurality of images, to implement the method according to any one of claims 10 to 19; and
the decoder side is configured to decode the bitstream based on rendering information corresponding to the plurality of source images, to obtain a plurality of decoded images, to implement the method according to any one of claims 1 to 9.

42. A computer-readable storage medium, wherein the storage medium stores a computer program or instructions, and when the computer program or the instructions are executed by a processing device, the method according to any one of claims 1 to 9 is implemented; and/or when the computer program or the instructions are executed by a processing device, the method according to any one of claims 10 to 19 is implemented.

43. A computer program product, comprising a computer program or instructions, wherein when the computer program or the instructions are executed by a processing device, the method according to any one of claims 1 to 9 is implemented; and/or when the computer program or the instructions are executed by a processing device, the method according to any one of claims 10 to 19 is implemented.
